# EUROPÄISCHE PATENTSCHRIFT

(11) **EP 2 920 484 B1**
(45) Veröffentlichungstag und Bekanntmachung des Hinweises auf die Patenterteilung: **24.07.2019**
(21) Anmeldenummer: 13805245.1
(22) Anmeldetag: 08.11.2013
(51) Int. Cl.: F16F 15/06, F16F 15/04, F16F 9/58, F16F 9/04, F16F 9/08, F16F 9/096

(54) **FEDER**
SPRING
RESSORT

(30) Priorität: 14.11.2012 DE 102012110956
(43) Veröffentlichungstag der Anmeldung: 23.09.2015
(73) Patentinhaber: Leichtbau-Zentrum Sachsen GmbH, 01307 Dresden (DE)
(72) Erfinder: HUFENBACH, Werner, 01324 Dresden (DE); LEPPER, Martin, 01279 Dresden (DE); WERNER, Jens, 01640 Coswig (DE); KÖHLER, Christian, 01099 Dresden (DE)
(86) Internationale Anmeldenummer: PCT/DE2013/100378
(87) Internationale Veröffentlichungsnummer: WO 2014/075661

(56) Entgegenhaltungen:
- DE-A1- 3 146 195
- DE-A1- 4 313 133
- DE-A1-102004 062 599
- DE-A1-102007 028 424
- GB-A- 1 055 017
- GB-A- 1 081 631
- GB-A- 1 142 324
- GB-A- 1 419 268
- GB-A- 1 497 465
- GB-A- 2 358 231
- US-A- 3 761 109
- US-A- 4 234 172
- US-A1- 2009 008 097

## Beschreibung

Die Erfindung betrifft eine Feder, wie zum Beispiel zur Verwendung bei Kraftfahrzeugen oder Maschinen.

Als Stand der Technik sind mechanische Federn, wie z.B. Schrauben-, Band- oder Blattfedern, bekannt. Die von Fahrzeugrädern oder beweglichen Maschinenteilen übertragenen Stoßkräfte werden von den Federn kompensiert, wobei die Federn, einseitig an einem Festlager zur Aufnahme der Gegenkraft fixiert, auf Torsion bzw. Biegung beansprucht werden. Eine solche Feder ist durch de US 3 761 109 bekannt.

Konstruktionsbedingt sind diese Torsions- und Biegefedern meist kombinierten Lasten und Spannungszuständen, aus z.B. einer Kombination aus Zug-, Schub- und Druckspannungen, ausgesetzt. Für die Energieumwandlung dieses kombinierten Lasteneintrages in einen entsprechenden Federweg benötigen die Federn eine Dehnbarkeit von etwa 50 % bei zugleich großen Materialquerschnitten (Heißing, Metin, Fahrwerkhandbuch - Grundlagen, Fahrdynamik, Komponenten, Mechatronik, Perspektiven, 1. Auflage 2007, Vieweg Verlag Wiesbaden, Seite 245, Bild 3-184; Göldner, Höhere Festigkeitslehre, Band 1, Fachbuchverlag Leipzig 1991, Seite 67 ff., Bild 2.5, Seite 75 ff. Bild 2.9).

Demnach haben derartige Federn einen hohen Materialbedarf, sind sehr schwer und benötigen einen erheblichen Bauraum.

Im Zuge der technischen Bestrebungen nach leichterer, raumsparender Bauweise im Maschinenbau und insbesondere auch in der Kraftfahrzeugtechnik, sind die bekannten Federn nachteilig.

Bestrebungen der Bauraumeinsparung, z.B. durch Verkürzung des Federweges, gereichen bei der bekannten Federbauweise gerade konträr zu umso größerem Materialbedarf und größerer Gesamtmasse der Feder.

Der Erfindung liegt die Aufgabe zugrunde, eine Feder bereitzustellen, mit denen die Nachteile des Standes der Technik behoben werden und die insbesondere den Leichtbauanforderungen hinsichtlich einer Massen- und Bauraumreduzierung genügen.

In diesem Zusammenhang liegt der Erfindung die Aufgabe zugrunde eine Feder zu entwickeln, die bei großem Federweg eine hohe Steifigkeit bietet und somit ein hohes Energieaufnahmevermögen gewährleistet.

Die Aufgabe wird erfindungsgemäß durch eine Feder nach den Merkmalen der Patentansprüche 1 und 6 gelöst.

Vorteilhafte Ausgestaltungen und Weiterbildungen der Erfindung gehen aus den abhängigen Patentansprüchen 2 bis 5 und 7 bis 21 sowie aus der nachfolgenden Beschreibung und den zugehörigen Zeichnungen hervor.

Erfindungsgemäß wird eine Feder mit wenigstens einem zugspannungsbelastbaren Zugkörper geringer Dehnbarkeit, und mit einer auf die geringe Dehnbarkeit des Zugkörpers abgestimmte Kraft-Weg-Übersetzungseinheit zur Kraft-Weg-Übersetzung einer Federkraft vorgeschlagen, wobei die Kraft-Weg-Übersetzungseinheit die an einem beweglich ausgebildeten Eingangsstellglied über eine Wegstrecke beaufschlagte Federkraft in einem bestimmten Kraft-Weg-Übersetzungsverhältnis in eine hohe Kraft an einem beweglich ausgebildeten Ausgangsstellglied umwandelt, welche vom zugspannungsbelastbaren Zugkörper aufgenommen wird, wobei das Ausgangsstellglied derart mit dem Zugkörper in Wirkverbindung steht, dass der Zugkörper im Wesentlichen nur eine Zugspannung im Zugkörper erfährt.

Ein Zugkörper im Sinne der Erfindung ist ein umlaufend- oder längserstreckter geometrischer Körper mit einem beispielsweise runden, rechteckigen, prismatischen oder kreisringförmigen Querschnitt, der mit einer äußeren Zug- oder Druckkraft beaufschlagt, im Wesentlichen nur Zugspannung erfährt.

Die Erfindung geht von der Erkenntnis aus, dass infolge der kombinierten Lasteinträge in den klassischen mechanischen Federn die Spannungsverteilung im Materialquerschnitt sehr ungleichmäßig ist. So stellt sich im Rohrquerschnitt einer auf Torsion beanspruchten Schraubenfeder ein parabolischer Spannungsverlauf von der Innenwand zur Außenwand ein, mit Wechsel von Schub- und Zugspannung und Spitzenspannungswerten an der Rohrinnenwand. Bei einer auf Biegung beanspruchten Blattfeder ergeben sich wechselseitige Druck-, Zugspannungsverteilungen mit einem Nulldurchgang in der Blattachse und höchsten Spannungswerten an der unteren und oberen Begrenzungsfläche der Blattfeder. Die Materialbereiche der Federn mit geringen oder Spannungswerten bei "0" sind an der Verformungsarbeit und damit an der Energieaufnahme gar nicht beteiligt. Nur ca. 10 bis 20 % des spezifischen Energieaufnahmevermögens des Materials herkömmlicher mechanischer Federn wird dadurch tatsächlich ausgenutzt. Die Materialauslastung herkömmlicher mechanischer Federn ist daher unvollständig und uneffizient.

Eine gleichmäßigere Spannungsverteilung und damit bessere Materialauslastung zur Energieaufnahme ist dagegen bei der erfindungsgemäßen Verwendung eines ausschließlich auf Zug beanspruchten Zugkörpers gegeben.

Allerdings hat der umlaufend- oder längserstreckte Zugkörper selbst nur geringe Dehnungseigenschaften, weshalb ein solcher Zugkörper für eine technische Anwendung als Feder bisher nicht geeignet schien. Die Dehnbarkeit der erfindungsgemäßen Zugkörper liegt abhängig vom Material und Querschnitt etwa bei 0,1 bis 6 %. Die Erfindung sieht daher vor, die geringe Dehnbarkeit des Zugkörpers mittels einer abgestimmten Kraft-Weg-Übersetzungseinheit zu kompensieren, die mit einer leistungsfähigen Kraft-Weg-Übersetzung eine am Eingangsstellglied der Kraft-Weg-Übersetzungseinheit über eine Wegstrecke beaufschlagte Federkraft in eine hohe Kraft am Ausgangsstellglied umwandelt, welche - bei zugleich geringem Weg des Ausgangsstellgliedes - vom Zugkörper infolge seiner hohen Zugspannungsbelastbarkeit aufgenommen werden kann. Die erfindungsgemäße Kraft-Weg-Übersetzung ermöglicht somit den Einsatz des materialeffizienten Zugkörpers als Feder.

Das erfindungsgemäße Ausgangsstellglied der Kraft-Weg-Übersetzungseinheit und der Zugkörper sind als Wirkeinheit derart gestaltet und zueinander angeordnet, dass über das Ausgangsstellglied im Wesentlichen ausschließlich Zugspannung in den Zugkörper eingetragen wird. Das beweglich ausgebildete Ausgangsstellglied kann zur Kraftübertragung in geeigneter Ausgestaltung mit dem festgestellten, fixierten Zugkörper verbunden sein oder anderweitig auf diesen einwirken. Es ist eine kraftschlüssige, formschlüssige oder stoffschlüssige Verbindung oder eine pneumatische oder hydraulische Einwirkung denkbar. Entsprechende Gestaltungsvarianten sind in den Unteransprüchen und Ausführungsbeispielen beschrieben.

Damit ist eine materialeffiziente Feder geschaffen, die eine hohe Kraftaufnahme bei großem Federweg realisiert, was im Ergebnis zu einem hohen spezifischen Energieaufnahmevermögen und somit zu einer erheblichen Bauraum- und Materialersparnis führt.

Nach einer vorteilhaften Ausführung ist der längserstreckte Zugkörper als ein Zugstab ausgebildet.

In dieser Gestaltung des Zugkörpers kann das Ausgangsstellglied der Kraft-Weg-Übersetzungseinheit die verstärkte Federkraft als Zugkraft konzentriert in Richtung der Mittenachse des Zugstabes eintragen. Damit wirkt die Zugkraft im Wesentlichen senkrecht zur Stabquerschnittsfläche des Zugstabes, woraus sich eine weitestgehend gleichmäßige Spannungsverteilung über die gesamte Stabquerschnittsfläche ergibt. Es erfolgt eine weitestgehend vollständige Ausnutzung des Stabquerschnitts und damit der gesamten Masse des Zugstabes für die Energieaufnahme, wodurch der Zugstab bei geringerem Materialeinsatz ein höheres Energieaufnahmevermögen erzielt, als bei herkömmlichen mechanischen Federelementen möglich ist.

Wirkt das Ausgangsstellglied genau zentrisch zur Mittelachse des Zugstabs, so dass die Zugkraft genau senkrecht zu Stangenquerschnittsfläche gerichtet ist, ergibt sich eine geradlinige Spannungsverteilung über die gesamte Stabquerschnittsfläche und damit eine besonders homogene Ausnutzung des Stabquerschnittes. Folglich kann der erforderliche Materialeinsatz des Zugstabes weiter verringert werden.

Durch eine reine Zugbelastung des Zugstabes besteht außerdem keine Gefahr des Ausknickens.

Nach einer alternativen Ausführung ist vorgesehen, dass der Zugkörper als ein Zugring ausgebildet ist.

Hierbei kann ein geeignet gestaltetes und geführtes Ausgangsstellglied der Kraft-Weg-Übersetzungseinheit die verstärkte Federkraft als eine radial von innen auf eine Innenfläche des Zugringes gerichtete Druckkraft einbringen. Im Ringquerschnitt des Zugrings wird hierdurch eine polarorthotrope Zugspannung mit jahresringartiger Ausrichtung ausgelöst, die eine weitestgehend vollständige Ausnutzung des Querschnitts des Zugringes für die Energieaufnahme bewirkt.

Nach einer vorteilhaften Ausgestaltung besteht der Zugkörper aus Faserverbundmaterial, vorzugsweise aus kohlenstofffaserverstärktem oder glasfaserverstärktem Kunststoff. Ein Zugkörper aus diesem Material ist besonders leicht und ermöglicht neben einem großen Energieaufnahmevermögen eine zugleich günstigere Dehnbarkeit gegenüber beispielsweise einem Zugkörper aus Stahl.

Zur Erzielung eines noch höheren Energieaufnahmevermögens eines Zugkörpers aus Faserverbundmaterial ist es vorgesehen, dass die Verstärkungsfasern des Faserverbundmaterials entlang der Längsachse des Zugstabes bzw. der Umlaufrichtung des Zugringes, vorzugsweise durchgehend erstreckt, angeordnet sind. Eine besonders vorteilhafte Ausgestaltung sieht vor, dass am Zugkörpers eine Lageröse ausgebildet ist und die Verstärkungsfasern als eine zumindest teilweise um die Lageröse umlaufende Faserschlinge angeordnet sind.

Das erhöht die Festigkeit des Zugkörpers aus Faserverbundmaterial an einer möglichen Verbindungstelle mit dem Ausgangsstellglied zur Krafteinleitung der Zugkraft in den Zugkörper und/oder an einer möglichen Verbindungstelle mit einem Federgehäuse oder dem Festlager der Feder zur Krafteinleitung der Gegenkraft.

Es wird alternativ eine Feder mit wenigstens einem druckspannungsbelastbaren Druckkörper geringer Dehnbarkeit, und mit einer auf die geringe Dehnbarkeit des Druckkörpers abgestimmte Kraft-Weg-Übersetzungseinheit zur Kraft-Weg-Übersetzung einer Federkraft vorgeschlagen, wobei die Kraft-Weg-Übersetzungseinheit die an einem beweglich ausgebildeten Eingangsstellglied über eine Wegstrecke beaufschlagte Federkraft in einem bestimmten Kraft-Weg-Übersetzungsverhältnis in eine hohe Kraft an einem beweglich ausgebildeten Ausgangsstellglied umwandelt, die von dem Druckkörper aufgenommen wird, wobei das Ausgangsstellglied derart mit dem Druckkörper in Wirkverbindung steht, dass der Druckkörper im Wesentlichen nur eine Druckspannung im Druckkörper erfährt.

Ein Druckkörper im Sinne der Erfindung ist ein kompakter geometrischer Körper mit einem beispielsweise runden, rechteckigen, prismatischen oder kreisringförmigen Querschnitt, der mit einer äußeren Zug- oder Druckkraft beaufschlagt, im Wesentlichen nur Druckspannung erfährt.

Bei der erfindungsgemäßen Verwendung eines ausschließlich auf Druck beanspruchten Druckkörpers wird ebenfalls eine gleichmäßigere Spannungsverteilung und damit bessere Materialauslastung zur Energieaufnahme erzielt.

Zur Kompensierung der geringen Dehnbarkeit des Druckkörpers sieht die Erfindung eine Kraft-Weg-Übersetzungseinheit vor, die mit einer leistungsfähigen Kraft-Weg-Übersetzung die am Eingangsstellglied der Kraft-Weg-Übersetzungseinheit über eine Wegstrecke beaufschlagte Federkraft in eine hohe Kraft am Ausgangsstellglied umwandelt, welche - bei zugleich geringem Weg des Ausgangsstellgliedes - vom Druckkörper infolge seiner hohen Druckspannungsbelastbarkeit aufgenommen werden kann. Die erfindungsgemäße Kraft-Weg-Übersetzung ermöglicht somit den Einsatz des materialeffizienten Druckkörpers als Feder.

Das erfindungsgemäße Ausgangsstellglied der Kraft-Weg-Übersetzungseinheit und der Druckkörper sind als Wirkeinheit derart gestaltet und zueinander angeordnet, dass über das Ausgangsstellglied im Wesentlichen ausschließlich Druckspannung in den Druckkörper eingetragen wird. Das beweglich ausgebildete Ausgangsstellglied kann zur Kraftübertragung in geeigneter Ausgestaltung mit dem festgestellten, fixierten Druckkörper verbunden sein oder anderweitig auf diesen einwirken. Es ist eine kraftschlüssige, stoffschlüssige oder formschlüssige Verbindung oder eine pneumatische oder hydraulische Einwirkung denkbar. Entsprechende Gestaltungsvarianten sind in den Unteransprüchen und Ausführungsbeispielen beschrieben.

Auch bei dieser Ausführung ist eine materialeffiziente Feder geschaffen, die eine hohe Kraftaufnahme bei geringem Federweg realisiert, was im Ergebnis zu einer erheblichen Bauraum- und Materialersparnis führt.

Nach einer bevorzugten Ausgestaltung der Erfindung beträgt das Kraft-Weg-Übersetzungsverhältnis der Kraft-Weg-Übersetzungseinheit mindestens 1:3, vorzugsweise 1:10.

Ein Kraft-Weg-Übersetzungsverhältnis in der bevorzugten Größenordnung erlaubt die Verwendung von Zugkörpern bzw. Drucckörpern aus an sich steifem Material, wie Federstahl, Faserverbundmaterial oder Titan.

Bei einem bereitgestellten Kraft-Weg-Übersetzungsverhältnis von beispielsweise 1:50 können Zugkörper bzw. Druckkörper mit besonders steifem Material und sehr geringer Dehnung, wie z.B. Titan verwendet werden. Es können damit Federn mit besonders kurzen Federwegen und noch geringerem Materialeinsatz und Platzbedarf realisiert werden.

Eine besonders raumsparende, schlanke Gestaltung der Feder ergibt sich, wenn das Eingangsstellglied und das Ausgangsstellglied der die Kraft-Weg-Übersetzungseinheit so angeordnet sind, dass deren Symmetrieachsen im Wesentlichen deckungsgleich sind. Erfolgt auch die Bewegungsrichtung der Stellglieder im Wesentlichen in ihrer Symmetrieachse und damit entlang einer gemeinsamen Mittellinie ist ein besonders schlanker, platzsparender Aufbau der Feder möglich.

Besonders vorteilhafte Ausführungen ergeben sich, wenn ein oder mehrere Zugkörper bzw. ein oder mehrere Druckkörper zentrisch oder koaxial oder achsensymmetrisch zur Symmetrieachse des Ausgangsstellgliedes angeordnet sind. Das wirkt sich nicht nur günstig auf den Platzbedarf aus. Es kann außerdem eine gleichmäßige, im Besten Falle parallelwirkende, hebelfreie Aufteilung der verstärkten Kraft auf die Zugkörper bzw. Drucckörper realisiert werden. Dadurch kann eine besonders gleichmäßige Zug- bzw. Druckspannungsverteilung über den gesamten Querschnitt des oder der Zugkörper bzw. Druckkörper erzeugt werden.

Vorzugsweise sind das Eingangsstellglied, das Ausgangsstellglied und/oder der Zugkörper bzw. Druckkörper in einem feststehenden Federgehäuse angeordnet, das Schutz vor Beschädigung und Verschmutzung der Bauteile der Feder bietet. Außerdem bietet das Federgehäuse geeignete Fixierungsmöglichkeiten für die Kraft-Weg-Übersetzungseinheit und/oder den Zugkörper bzw. Druckkörper zum Zwecke der Kraftübertragung.

Nach einer besonders bevorzugten Ausführungsform der Erfindung ist eine hydraulische Kraft-Weg-Übersetzungseinheit mit einer hydraulischen Antriebsstufe und einer hydraulischen Abtriebsstufe ausgebildet, die zwei miteinander verbundene, mit Hydraulikmedium gefüllte Arbeitsräume aufweist und das Eingangsstellglied den antriebsseitigen Arbeitsraum der Antriebsstufe und das Ausgangsstellglied den abtriebsseitigen Arbeitsraum der Abtriebsstufe zumindest teilweise begrenzt.

Die hydraulische Kraft-Weg-Übersetzungseinheit liefert gegenüber mechanischen Lösungen der Kraft-Weg-Übersetzung hohe Übersetzungsverhältnisse bei zugleich geringem Platz- und Materialbedarf und ist damit sehr effizient. Die Übersetzungsarbeit übernimmt das Hydraulikmedium, wie z.B. Hydrauliköl, das bei Betätigen des beweglich geführten Eingangsstellgliedes zwischen dem antriebsseitigen Arbeitsraum der Antriebsstufe und dem abtriebsseitigen Arbeitsraum der Abtriebsstufe überströmt und das beweglich geführte Ausgangsstellglied antreibt. Die Arbeitsräume sind entsprechend dem zu realisierenden Übersetzungsverhältnisse in ihrer Größe zu einander abgestuft. Die Bauteile der Antriebs- und Abtriebsstufe wie auch die zugehörigen Stellglieder der hydraulischen Kraft-Weg-Übersetzung benötigen wenig Raum, sind flexibel zu einander anordenbar und haben eine kleine Masse.

In einer vorteilhaften Ausgestaltung der hydraulischen Kraft-Weg-Übersetzungseinheit weist die Antriebsstufe einen den antriebsseitigen Arbeitsraum bildenden Antriebszylinder und einen Antriebskolben auf, der als Eingangsstellglied im Antriebszylinder beweglich geführt ist und den antriebsseitigen Arbeitsraum begrenzt.

In einer weiteren vorteilhaften Ausgestaltung der hydraulischen Kraft-Weg-Übersetzungseinheit weist die Abtriebsstufe einen den abtriebsseitigen Arbeitsraum bildenden Abtriebszylinder und einen Abtriebskolben auf, der als Ausgangsstellglied im Abtriebszylinder beweglich geführt ist und den abtriebsseitigen Arbeitsraum begrenzt.

Antriebsstufe und /oder Abtriebsstufe realisieren auf diese Weise mit konstruktiv einfachen Mitteln eine geradlinige Bewegung ihrer Stellglieder als Grundlage für vielfältige Varianten der Übertragung der Federkraft als axiale Zug- oder Drucckraft auf den Zugkörper bzw. Druckkörper.

Eine vorteilhafte Ausführungsform sieht vor, dass das Eingangsstellglied einen hohlprofilartigen, insbesondere hohlzylindrischen, Antriebskolben aufweist und/oder das Ausgangsstellglied einen hohlprofilartigen, insbesondere hohlzylindrischen, Abtriebskolben aufweist.

In Zusammenwirken mit einem zylindrisch geformten Antriebszylinder bzw. Abtriebszylinder ist der hohlprofilartige Antriebskolben bzw. Abtriebskolben vorzugsweise hohlzylindrisch ausgebildet. Auf diese Weise kann die Masse des Antriebskolbens und/oder des Abtriebskolben unter Erhalt einer ausreichenden Führung im Antriebszylinder bzw. Abtriebszylinder verringert werden. Der Hohlraum im Inneren des Antriebskolbens bzw. Abtriebskolbens steht raumsparend dem antriebsseitigen Arbeitsraum bzw. dem abtriebsseitigen Arbeitsraum zur Verfügung.

In einer weiteren vorteilhaften Ausführung ist vorgesehen, dass der Abtriebskolben eine bewegliche Membran aufweist, welche den abtriebsseitigen Arbeitsraum begrenzt. Damit ist das Ausgangsstellglied verschleißfrei gelagert. Diese Gestaltung benötigt außerdem keine Dichtung zwischen dem beweglichen Ausgangsstellglied und der Kammerwand des abtriebsseitigen Arbeitsraumes. Das Ausgangstellglied selbst weist durch den Einsatz der beweglichen Membran eine besonders geringe Masse auf.

Eine konstruktiv besonders vorteilhafte Weiterentwicklung der hydraulisch betriebenen Feder sieht vor, dass das Ausgangstellglied einen behälterartigen, unidirektional elastischen, vorzugsweise in seiner Längserstreckung elastischen Abtriebskolben aufweist, der den abtriebsseitigen Arbeitsraum allseitig umschließt.

Der behälterartige Abtriebskolben kann in der Eigenschaft als unidirektional elastischer Abtriebskolben aus einem Material bestehen, dass im Wesentlichen nur in eine Richtung, vorzugsweise in seiner Längsrichtung dehnbar ist. Der behälterartige Abtriebskolben kann aber auch alternativ oder zusätzlich eine gerichtet, vorzugsweise in seiner Längsrichtung, verformbare Wandstruktur aufweisen, wie z.B. eine Wellen-, Faltenstruktur. In andere Richtungen, insbesondere in Umfangsrichtung, ist der behälterartige Abtriebskolben demgegenüber dehnungssteif ausgebildet, um die vom abtriebsseitigen Arbeitsraum erzeugten Druckkräfte des Hydraulikmediums aufnehmen zu können. Die Druckkraft des Hydrauliköls im abtriebsseitigen Arbeitsraum wirkt allseitig auf die Wandung des behälterartigen Abtriebskolbens und bewirkt infolge der unidirektionalen Elastizität eine Dehnung des Abtriebskolben in die bevorzugte Richtung, wodurch dieser gezielt, vorzugsweise in Längsrichtung, gestreckt wird und eine gezielte Wirkrichtung realisiert. Der behälterartige Abtriebskolben kann auf diese Weise eine geradlinige Verstellbewegung vollführen und die aufzubringende Zug- oder Druckkraft linear auf den Zugkörper bzw. Druckkörper übertragen, der aufgrund seiner Dehnungssteifigkeit die entsprechende Gegenkraft aufbringt. Der konstruktiv sehr einfache Aufbau des Abtriebskolbens ist sehr mitteleffizient, insbesondere können Abtriebszylinder, sowie Führungen und Dichtungen, wie bei einer Zylinder-/Kolbenausführung der Abtriebsstufe entfallen, was zu einer weiteren Einsparung an konstruktiven Mitteln und zur Masseersparnis führt.

Vorzugsweise ist vorgesehen, dass der behälterartige, unidirektional elastische Abtriebskolben aus Faserverbundmaterial besteht, dessen Verstärkungsfasern im Wesentlichen unidirektional und quer zur Elastizitätsrichtung, vorzugsweise quer zur Längserstreckung des Abtriebskolbens, erstreckt angeordnet sind.

Ein behälterartiger, elastischer Abtriebskolben in dieser Ausführung ist besonders leicht und gewährleistet durch die erfindungsgemäße Faserlage eine ausreichende Elastizität in Längserstreckung und eine genügend hohe Steifigkeit in Umfangsrichtung.

Eine besonders vorteilhafte Ausführungsform ergibt sich, wenn der Zugkörper im abtriebsseitigen Arbeitsraum integriert angeordnet ist. Der Zugkörper ist innenseitig mit dem beweglich geführten Ausgangsstellglied, wie zum Beispiel mit dem hohlprofilartigen Abtriebskolben verbindbar und wird in Wirkrichtung des Abtriebskolbens mit einer Zugkraft beaufschlagt. In dieser Anordnung kann der Zugkörper, z.B. ein Zugstab, exakt zentrisch zur Symmetrieachse des Abtriebskolbens platziert werden, wodurch die Zugkraft hebelfrei und damit genau senkrecht zur Stabquerschnittsfläche in den Zugstab eingebracht werden kann und eine optimale Spannungsverteilung erzielt wird. Diese integrierte Anordnung mindert den konstruktiven Aufwand der Verbindung des Zugkörpers mit dem Ausgangsstellglied und führt zu Platzersparnis in der Gesamtkonstruktion der erfindungsgemäßen Feder.

Die Einbettung des Zugkörpers im Hydraulikmedium wirkt sich auch auf den Massenbilanz der Feder vorteilhaft aus. Der hydrostatische Druck im Arbeitsraum erhöht die Belastbarkeit des Zugkörpers, infolge dessen der Zugkörper noch schlanker und damit leichter gemacht werden kann.

In einer vorteilhaften Weiterentwicklung der hydraulisch betriebenen Feder ist vorgesehen, dass das Ausgangstellglied ein behälterartigen, elastischen und zugspannungsbelastbaren Abtriebskolben aufweist, der den abtriebsseitigen Arbeitsraum allseitig umschließt und integrativ einen Hohlprofil-Zugkörper bildet.

Der behälterartige, elastische und zugspannungsbelastbare Abtriebskolben ist materialspezifisch derart ausgeführt, dass er allseitig, vorzugsweise in seiner Längs - und Umfangserstreckung, mit einer angepassten Dehnsteifigkeit verformbar und dehnbar ist. Der behälterartige, zugspannungsbelastbare Abtriebskolben kann alternativ oder zusätzlich eine verformbare, dehnungssteife Wandstruktur aufweisen, wie z.B. eine steife Wellen-, Faltenstruktur, die die Dehnbarkeit bei angepasster Dehnsteifigkeit begünstigt. Der behälterartige, elastische Abtriebskolben ist allseitig derart steif ausgebildet, dass die vom abtriebsseitigen Arbeitsraum erzeugten Druckkräfte des Hydraulikmediums unter Bereitstellung einer Gegenkraft aufgenommen werden können.

Unter der Federbelastung kann der behälterartige, elastische und zugspannungsbelastbare Abtriebskolben allseitig, vorzugsweise in Längs- und Umfangsrichtung geweitet werden, wobei infolge der Dehnsteifigkeit eine gleichmäßig verteilte Zugspannung im Wandquerschnitt des Abtriebskolbens aufgebaut werden kann.

Damit ist der zugspannungsbelastbare Abtriebskolben geeignet zugleich die Funktion eines Zugkörpers zu übernehmen, der eine ausgeprägte Dehnbarkeit und Zugspannungsbelastbarkeit aufweist. Das Ausgangstellglied der Kraft-Weg-Übersetzungseinheit und der Zugkörper bilden hierbei eine funktionelle Einheit, durch die ein separater Zugkörper entbehrlich wird. Der Abtriebskolben ist somit zugleich ein Hohlprofil-Zugkörper. Diese Ausführung mit Doppelfunktion führt im Weiteren zu erheblichen Masseeinsparungen. Zudem kann eine Feder in dieser konstruktiven Einfachheit den Bauraumbeschränkungen im Fahrzeug oder der Maschine besonders gut angepasst werden.

In einer besonders geeigneten Ausführung besteht der behälterartige, elastische und zugspannungsbelastbare Abtriebskolben aus Faserverbundmaterial, dessen Verstärkungsfasern in Umfangrichtung eine Faserorientierung mit einem Winkel von ca. 90° zur Längsachse des Abtriebskolbens aufweisen und die längsgerichteten Verstärkungsfasern in eine Faserorientierung mit einem Winkel von ca. 0° bis ca. ± 60° zur Längsachse aufweisen.

In dieser Ausführung aus Faserverbundmaterial mit der bevorzugten Faserorientierung kann trotz leichter Bauweise die erforderliche Elastizität einerseits und Festigkeit andererseits gewährleistet werden, die an die Doppelfunktion aus beweglichen Abtriebskolben und zugspannungsbelastbaren Zugkörper gestellt sind. In Abhängigkeit der gewählten Faserorientierung und des Materials der Verstärkungsfasern kann das Verhältnis der Längs- und Umfangsdehnbarkeit des Abtriebskolbens bzw. Zugkörpers bestimmt werden und z.B. die Richtung der Zugspannungsbelastung und die Expansionsgeometrie an gegebene Bauraumanforderungen angepasst werden.

Eine weitere vorteilhafte Ausführungsform der hydraulisch betriebenen Feder sieht vor, dass das Ausgangstellglied einen ringförmigen Abtriebskolben aufweist, der integrativ einen als Kolbenzugring gestalteten Zugkörper bildet. In dieser Ausführung sind die Vorzüge des Zugringes als Zugkörper einerseits und die der hydraulischen Kraft-Weg-Übersetzungseinheit andererseits vereint.

Eine praktische Ausgestaltung der Feder sieht vor, dass der antriebsseitige und der abtriebsseitige Arbeitsraum über eine, vorzugsweise flexible, Verbindungsleitung miteinander verbunden sind. So können Bauteile der hydraulischen Kraft-Weg-Übersetzungseinheit voneinander räumlich getrennt platziert werden, was unter dem Gesichtspunkt der herrschenden Bauraumbeschränkungen im Maschinenbau, insbesondere im Fahrzeugbau, günstige Anordnungs- und Gestaltungsvarianten der Feder ermöglicht. Beispielsweise können auf diese Weise im Fahrzeugraum zur Verfügung stehende Bauraumnischen optimal ausgelastet werden und z.B. die Baugruppen der Antriebsstufe bzw. Abtriebsstufe dahin platziert werden, wo sie zu Einstellungs- bzw. Wartungszwecken leichter zugänglich und bedienbar sind.

Bei einer weiteren vorteilhaften Ausgestaltung weist die hydraulische Kraft-Weg-Übersetzungseinheit ein Dämpfungsglied auf.

Damit verfügt die erfindungsgemäße Feder neben der Federwirkung auch über eine Dämpfungswirkung. Das Dämpfungsglied erzeugt bei einer dynamischen Kraftbeaufschlagung der Feder eine geschwindigkeitsabhängige Gegenkraft, welche also bei großer Geschwindigkeit der Krafteinwirkung entsprechend ansteigt. Dadurch wird die mechanische Stoßenergie schneller dissipiert. Mit dem in der hydraulischen Kraft-Weg-Übersetzungseinheit integriertem Dämpfungsglied sind übliche Dämpfereinheiten als Ergänzungsbaugruppe zur Feder entbehrlich, was in der Gesamtheit des Feder-Dämpfer-Systems betrachtet ebenfalls zu Masse- und Platzeinsparung führt. Damit ist die erfindungsgemäße Feder auch als masse- und platzsparender Feder-Dämpfer einsetzbar.

Ist das Dämpfungsglied vorzugsweise unmittelbar zwischen dem antriebsseitigen und abtriebsseitigen Arbeitsraum der hydraulischen Kraft-Weg-Übersetzungseinheit angeordnet, führt dies zu einer besonders platzsparenden Gestaltung der Feder-Dämpfer-Einheit.

Vorteilhafterweise ist das Dämpfungsglied als ein Ventilblock ausgebildet, der mit dem antriebsseitigen und abtriebsseitigen Arbeitsraum in Strömungsverbindung steht.

Der Ventilblock kann mit Umschalt-Strömungsventilen oder einem separaten Druck- und Saug-Strömungsventil ausgestattet sein, die jeweils im Strömungsweg zwischen dem antriebsseitigen und abtriebsseitigen Arbeitsraum angeordnet sind. Entsprechend der Strömungsrichtung und des Strömungswiderstand der Strömungsventile kann der gewünschte Dämpfungsgrad vorgegeben werden. Die einstellbaren Strömungsventile ermöglichen außerdem, den Strömungswiderstand im Druck- bzw. Saugbetrieb unterschiedlich einzustellen, womit verschiedene Dämpfungsraten beim Ein- und Ausfedern verwirklicht werden können.

Nach einer weiteren vorteilhaften Ausgestaltung der hydraulisch betrieben Feder ist eine externe Hydraulikeinheit mit einem Ausgleichsarbeitsraum vorgesehen, der mit dem antriebsseitigen und abtriebsseitigen Arbeitsraum in Strömungsverbindung steht, wobei das Volumen des Ausgleichsarbeitsraumes mittels eines Stellkolbens veränderbar ist.

Mit diesen Mitteln ist ein einstellbarer Pufferraum für das Hydraulikmedium im Hydrauliksystem geschaffen, mit dem das Volumen des Hydraulikmediums im antriebsseitigen und abtriebsseitigen Arbeitsraum der hydraulischen Kraft-Weg-Übersetzungseinheit verändert und folglich der Abstand von Eingangs- und Ausgangsstellglied zueinander bestimmt werden kann. Damit kann zum einen die Federlänge an verschiedene Einbauerfordernisse angepasst werden und es ergibt sich zum anderen die Möglichkeit der Höhenverstellung eines mit der Feder verbundenen Maschinenobjektes oder Fahrzeuges. Die erfindungsgemäße Ausführungsform der Feder mit einer Höhenniveauregulierung ist in ihrer Gesamtheit leichter und platzsparender als bekannte Ausführungen von Niveauregulierung im Maschinen- und Fahrzeugbau.

Mit den erfindungsgemäßen Lösungen in den vorstehenden Ausführungsformen kann im Ergebnis eine an die Gewichtsanforderungen und den Bauraumbeschränkungen im Fahrzeug oder der maschinellen Anlage form- und belastungsgerecht angepasste Feder bereitgestellt werden.

Diese und weitere aus den Patentansprüchen, der Beschreibung der Ausführungsbeispiele und den Zeichnungen hervorgehende Merkmale können jeweils für sich oder in Kombination als vorteilhafte Ausführungsformen der Erfindung verwirklicht sein, für die Schutz beansprucht wird.

Die erfindungsgemäße Feder wird nachfolgend an mehreren Ausführungsbeispielen näher erläutert. Die zugehörigen Zeichnungen zeigen in
- Fig. 1a,b,c: Schnittansichten einer mechanischen Druckfeder in drei Funktionszuständen in einem Ausführungsbeispiel mit zwei Zugstäben und einer mechanischen Kraft-Weg-Übersetzungseinheit,
- Fig. 2a,b: Schnittansichten einer mechanischen Zugfeder in zwei Funktionszuständen in einem Ausführungsbeispiel mit zwei Zugstäben und einer mechanischen Kraft-Weg-Übersetzungseinheit,
- Fig. 3: schematische Schnittdarstellung eines Zugstabes aus Faserverbundmaterial,
- Fig. 4a,b,c: Schnittansichten einer mechanischen Druckfeder in drei Funktionszuständen in einem Ausführungsbeispiel mit einem Zugring und einer mechanischen Kraft-Weg-Übersetzungseinheit,
- Fig. 5a,b,c: Schnittansichten einer hydraulischen Druckfeder in drei Funktionszuständen in einem Ausführungsbeispiel mit zwei Zugstäben und einer hydraulischen Kraft-Weg-Übersetzungseinheit,
- Fig. 6a,b,c: Schnittansichten der Druckfeder nach Fig. 5 in drei Funktionszuständen mit einem Abtriebskolben mit beweglicher Membran,
- Fig. 7a,b,c: Schnittansichten einer Druckfeder in drei Funktionszuständen in einem Ausführungsbeispiel mit einem Druckkörper und einer hydraulischen Kraft-Weg-Übersetzungseinheit,
- Fig. 8: Schnittansicht der Druckfeder nach Fig. 5 mit einem Dämpfungsglied mit Ventilblock,
- Fig. 8.1: Detailschnittansicht aus Fig. 8,
- Fig. 9: Schnittansicht der Druckfeder nach Fig. 5 mit einer flexiblen Verbindungsleitung zwischen Antriebs- und Abtriebszylinder und einer externen Hydraulikeinheit,
- Fig. 10: Schnittansicht der Druckfeder nach Fig. 5 mit einer flexiblen Verbindungsleitung und einem externen Antriebszylinder,
- Fig. 11a,b,c: Schnittansichten einer hydraulischen Druckfeder in drei Funktionszuständen in einem Ausführungsbeispiel mit einem externen Abtriebszylinder mit hohlzylindrischem Abtriebskolben und einem integrierten Zugstab,
- Fig. 12a,b,c: Schnittansichten einer hydraulischen Druckfeder in drei Funktionszuständen in einem Ausführungsbeispiel mit einem behälterartigen, elastischen Abtriebskolben und einem integrierten Zugstab,
- Fig. 13: Schnittansicht einer hydraulischen Druckfeder in einem Ausführungsbeispiel mit einem behälterartigen, zugspannungsbelastbaren Abtriebskolben mit integrativ ausgebildetem Zugkörper,
- Fig. 14a,b,c: Schnittansichten einer hydraulischen Druckfeder in drei Funktionszuständen in einem Ausführungsbeispiel mit einem ringförmigen, zugspannungsbelastbaren Abtriebskolben mit integrativ ausgebildetem Zugkörper und
- Fig. 15: schematische Darstellung einer mechanischen Druckfeder in drei Funktionszuständen in einem Ausführungsbeispiel mit einem Zugstab und einer mechanischen Kraft-Weg-Übersetzungseinheit.

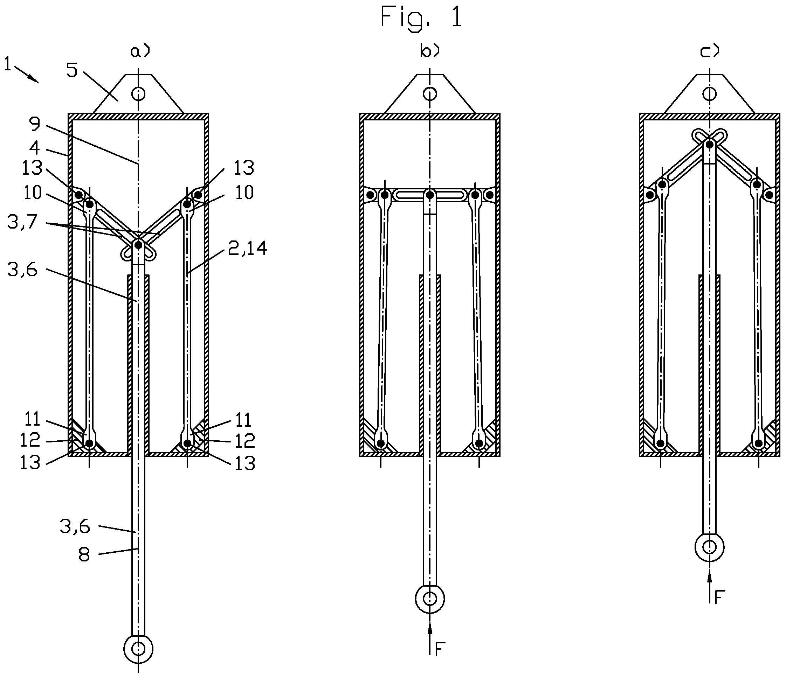

Fig. 1 zeigt in drei Funktionszuständen a, b, und c eine erfindungsgemäße mechanische Druckfeder 1, die zwei Zugstäbe 2 als Zugkörper 2 und eine mit diesen Zugstäben 2 in Wirkverbindung stehende mechanische Kraft-Weg-Übersetzungseinheit 3 umfasst. Die Zugstäbe 2 und die Kraft-Weg-Übersetzungseinheit 3 sind in einem zylindrischen, feststehenden Federgehäuse 4 angeordnet, welches ein Festlager 5 zur Befestigung der Feder 1 an einer nicht gezeigten Fahrzeugkonstruktion aufweist.

Die mechanische Kraft-Weg-Übersetzungseinheit 3 besteht aus einem Hebelgestänge 3, auch Hebelei genannt und umfasst eine beweglich geführte Antriebsstange 6 als Eingangsstellglied 6 und zwei zueinander symmetrisch angeordnete, bewegliche Hebestangen 7 als Ausgangstellglied 7. Die beiden Hebelstangen 7 sind gleich lang.

Die Antriebsstange 6 ist zentrisch zum Federgehäuse 4 angeordnet und in einer Führung des Federgehäuses 4 axial beweglich geführt. Die beiden Zugstäbe 2 weisen einen vornehmlich quadratischen Querschnitt auf; lediglich am Kopfende 10 und am Fußende 11 ist der Querschnitt rechteckig ausgebildet. Die beiden Zugstäbe 2 sind achsensymmetrisch und im Wesentlichen parallel zu den Symmetrieachsen 8, 9 der Antriebsstange 6 und des zylindrischen Federgehäuses 4 angeordnet, die wiederum zueinander deckungsgleich verlaufen. Die Hebelstangen 7 sind jeweils an einem Ende mittels eines äußeren Gelenkes am Federgehäuse 4 verschiebefest, aber drehbeweglich angebracht. An den zueinander zuweisenden Enden sind die Hebelstangen 7 als Langloch ausgeführt, in denen der Kopf der Antriebsstange 6 über ein zentrales Gelenk in einem großen Abstand von den äußeren Gelenken der Hebelstangen 7 verschiebebeweglich gelagert ist. Das zentrale Gelenk zur Aufnahme der Antriebsstange 6 befindet sich in einem das Übersetzungsverhältnis bestimmenden Abstand von den äußeren Gelenken der Hebelstangen 7 und den Anschlusspunkten der Zugstäbe 2 an den Hebelstangen 7.

Nahe den äußeren Gelenken der Hebelstangen 7 sind diese jeweils mittels eines Kopfgelenkes drehbeweglich mit je einem Kopfende 10 der Zugstäbe 2 verbunden. Anderen Endes sind die Fußenden 11 der Zugstäbe 2 jeweils mittels eines Fußgelenkes mit Befestigungslaschen 12 des feststehenden Federgehäuses 4 verbunden. Die Befestigungslaschen 12 sind an der Stirnwand des feststehenden Federgehäuses 4 angeordnet, die von der Antriebsstange 6 durchdrungen ist.

Die Drehachsen der äußeren Gelenken der Hebelstangen 7 und die der Kopfgelenke und der Fußgelenke der Zugstäbe 2 sowie die Drehachse des zentralen Gelenkes der Antriebsstange 6 sind gleichermaßen senkrecht zur Blattebene in Fig. 1 gerichtet.

Für den Anschluss des Kopf- bzw. Fußgelenkes weisen das Kopfende 10 bzw. das Fußende 11 der Zugstäbe 2 jeweils Lagerösen 13 auf, die entlang einer Längsachse 14 des jeweiligen Zugstabes 2 angeordnet sind.

In einem lastfreien, ausgefederten Ausgangszustand der Druckfeder 1 befindet sich die Antriebsstange 6 in einer weit aus dem Federgehäuse 4 ausgefahrenen Ausgangsstellung (Fig. 1a), und die Zugstäbe 2 sind spannungsfrei.

Bei der Beaufschlagung der Antriebsstange 6 mit einer axial gerichteten Federkraft F bewegt sich diese in das Federgehäuse 4 hinein, wobei das zentrale Gelenk der Antriebsstange 6 entlang der Langlöcher der Hebelstangen 7 gleitet und die Hebelstangen 7 um die Drehachse ihrer äußeren Gelenke bewegt werden. Bei einer Mittelstellung (Fig. 1b) stehen sich die Hebelstangen 7 in etwa gegenüber, wobei die Zugstäbe 2 eine Zugkraft erfahren und gedehnt werden.

Die auf die Antriebsstange 6 aufgebrachte Federkraft F wird in diesem Ausführungsbeispiel mit einem Übersetzungsverhältnis von etwa 1:5 entsprechend des Hebelgesetzes verstärkt und mit einem etwa fünffach kürzerem Weg der Hebelstangen 7 als entsprechend verstärkte Zugkraft gleichmäßig und axial, d.h. längs der Zugstäbe 2 gerichtet, auf die Zugstäbe 2 übertragen. Die einseitig an dem feststehenden Federgehäuse 4 fixierten Zugstäbe 2 werden dabei in Richtung ihrer Längsachsen 14 gleichmäßig gedehnt, wobei jeder Zugstab 2 einer gleichmäßigen Zugspannung ausgesetzt ist, die über den Stabquerschnitt quer zur Längsachse 14 des Zugstabes 2 nahezu homogen verteilt ist. Damit kann die Masse des Zugstabes 2 weitestgehend vollständig zur Energieaufnahme ausgenutzt werden.

Bei einem maximalen Einfederungszustand der Feder 1 unter Maximallast (Fig. 1c) befindet sich die Antriebsstange 6 in einer weitest möglichen eingefahrenen Stellung und die Hebelstangen 7 in einer etwa gespiegelten Stellung gegenüber ihrer lastfreien Ausgangsstellung. Die Zugstäbe 2 unterliegen dabei einer maximalen Zugspannung bei maximal möglicher Dehnung.

Beim Ausfedern der Druckfeder 1 (nicht dargestellt) bewegt sich die Antriebsstange 6 in die Ausgangsstellung nach Fig. 1a zurück, wobei das zentrale Gelenk der Antriebsstange 6 in umgekehrter Weise in den Langlöchern der Hebelstangen 7 gleitet und die Zugstäbe 2 entlastet werden.

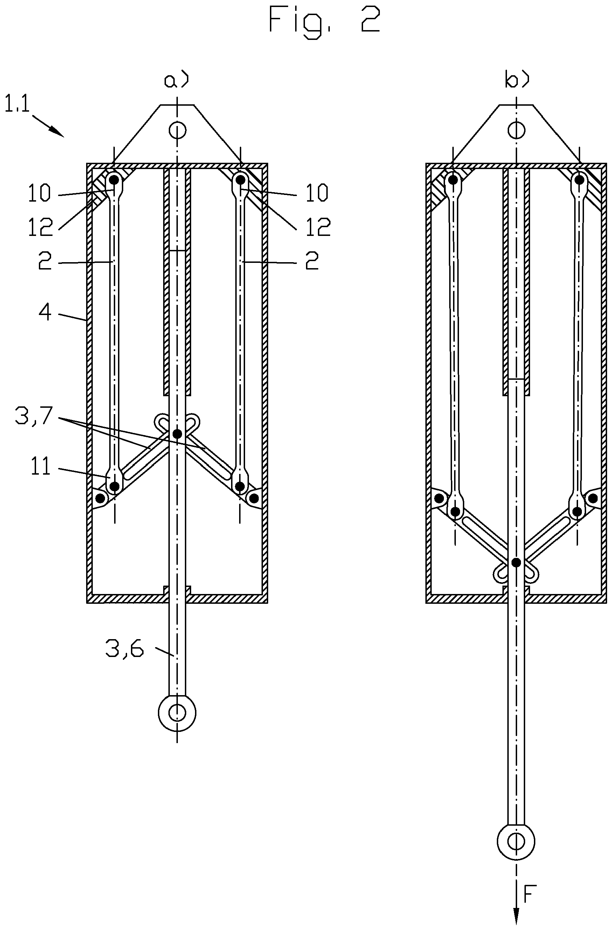

Fig. 2 zeigt eine erfindungsgemäße mechanische Zugfeder 1.1 in zwei Funktionszuständen a) und b). Die erfindungsgemäße Zugfeder 1.1 umfasst zwei Zugstäbe 2 als Zugkörper 2 und eine mit diesen Zugstäben 2 in Wirkverbindung stehende mechanische Kraft-Weg-Übersetzungseinheit 3. Die Zugfeder 1.1 umfasst analog die Bauteile wie bei der mechanischen Druckfeder 1 nach Fig. 1, die aber in der Anordnung nach Fig. 2 eine umgekehrte Federwirkung erzeugen. Zur Vermeidung von Wiederholungen sollen nachfolgend nur die sich gegenüber der Federvorrichtung nach Fig. 1 unterscheidenden Merkmale und Bauteile beschrieben werden. Gleiche Bauteile mit gleicher Funktion haben gleiche Bezugszeichen.

Im Unterschied zur mechanischen Druckfeder 1 nach Fig. 1 sind die Hebelstangen 7 der Hebelei 3 nahe ihrer äußeren Gelenke jeweils mittels des Fußgelenkes drehbeweglich mit je einem Fußende 11 des Zugstabes 2 verbunden. Anderen Endes sind die Kopfenden 10 der Zugstäbe 2 jeweils mittels des Kopfgelenkes mit den Befestigungslaschen 12 des feststehenden Federgehäuses 4 verbunden. Die Befestigungslaschen 12 sind an einer dem Durchgang der Antriebsstange 6 abgewandten Stirnwand des Federgehäuses 4 angeordnet sind. Die Antriebsstange 6 ist zusätzlich in einer dem Gehäusedurchgang gegenüberliegend angeordneten Führung des Federgehäuses 4 axial beweglich geführt.

In einem lastfreien Ausgangszustand der Zugfeder 1.1 befindet sich die Antriebsstange 6 in einer weit in die Führung des Federgehäuse 4 eingefahrenen Ausgangsstellung(Fig. 2a).

Bei Einwirkung einer axial gerichteten Federkraft F an der Antriebsstange 6 in Pfeilrichtung bewegt sich diese aus dem Federgehäuse 4 heraus.

Bei einem unter Maximallast voll eingefederten Zustand der Zugfeder 1.1 (Fig. 2b) ist die Antriebsstange 6 weitest möglich aus dem Federgehäuse 4 ausgefahren; die Hebelstangen 7 befinden sich hierbei in einer etwa gespiegelten Stellung gegenüber ihrer lastfreien Ausgangsstellung.

Die auf die Antriebsstange 6 einwirkende Federkraft F wird dabei entsprechend des Hebelgesetzes mit einem Übersetzungsverhältnis analog der Hebelei 3 nach Fig. 1 verstärkt und mit erheblich kürzerem Weg gleichmäßig und axial, d.h. längs der Zugstäbe 2 gerichtet, auf die Zugstäbe 2 übertragen. Auch in dieser Ausführung werden die Zugstäbe 2 gleichmäßig gedehnt, wobei jeder Zugstab 2 unter der homogen über den Stabquerschnitt verteilten Zugspannung weitestgehend vollständig zur Energieaufnahme ausgenutzt wird.

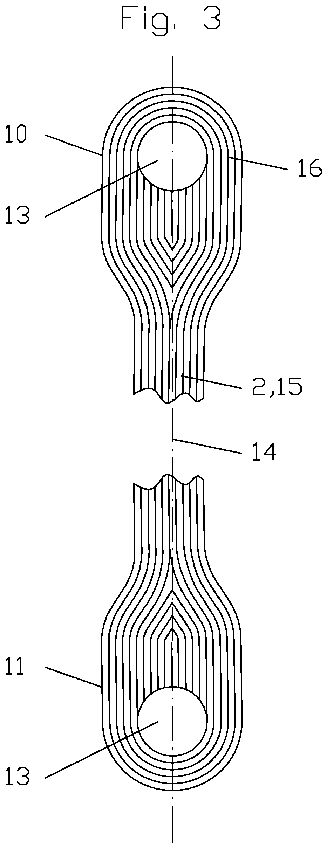

In Fig. 3 ist ein Zugstab 2 nach den vorangegangenen Ausführungsbeispielen ausschnittsweise und schematisch dargestellt. Der Zugstab 2 besteht aus kohlenstofffaserverstärktem Kunststoff, wobei der Faserverlauf 15 der Kohlenstofffasern durch einzelne Linien dargestellt ist. Die Kohlenstofffasern sind im Wesentlichen entlang der Längsachse 14 des Zugstabes 2 und durchgehend erstreckt angeordnet. Im Bereich des Kopfendes 10 und des Fußendes 11 des Zugstabes 2 ist der Zugstab 2 verdickt und umschließt jeweils eine Lageröse 13. Die Mehrzahl der Kohlenstofffasern bilden am Kopfende 10 und Fußende 11 des Zugstabes 2 jeweils eine Faserschlinge 16 um die Lagerösen 13 und verstärken somit den Zugstab 2 in diesen Bereichen.

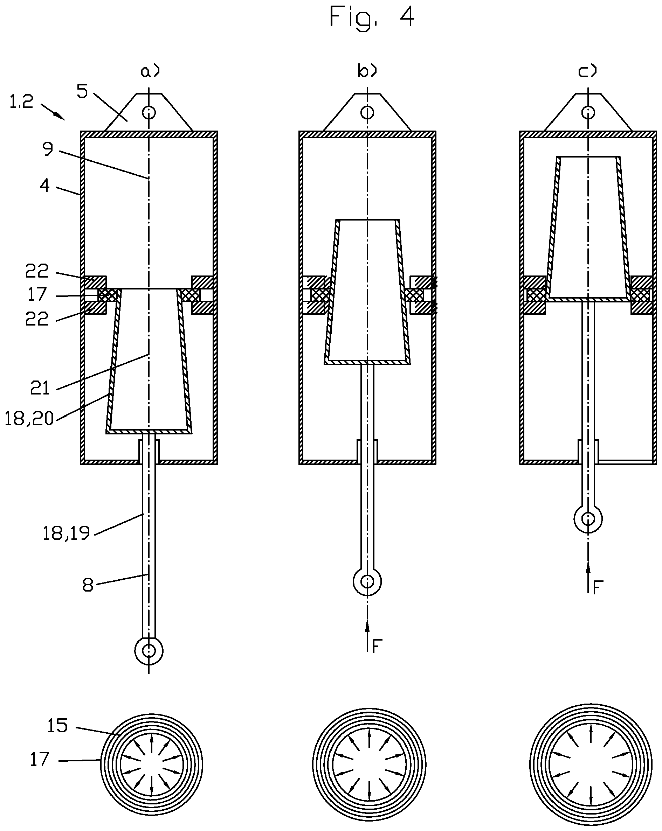

Fig. 4 zeigt in drei Funktionszuständen a, b, c jeweils eine Schnittansicht einer erfindungsgemäße Druckfeder 1.2, die einen Zugring 17 als Zugkörper 17 und eine auf den Zugring 17 abgestimmtes Konusgestänge 18 als mechanische Kraft-Weg-Übersetzungseinheit 18 umfasst. Ergänzend zu den Schnittansichten der Druckfeder 1.2 in den Funktionszuständen a, b, c ist in jeweils einer Draufsicht der Zugring 17 im zugehörigen Zustand dargestellt.

Der Zugring 17 und die Kraft-Weg-Übersetzungseinheit 18 sind in dem zylindrischen, feststehenden Federgehäuse 4 angeordnet, welches das Festlager 5 zur Befestigung der Feder 1.2 an einer nicht gezeigten Fahrzeugkonstruktion aufweist.

Die mechanische Kraft-Weg-Übersetzungseinheit 18 verfügt als Eingangsstellglied 19 über eine bewegliche Schubstange 19 und als Ausgangsstellglied 20 über einen direkt mit der Schubstange 19 verbundenen kegelstumpfförmigen Stößel 20.

Die Schubstange 19 und der in Verlängerung der Schubstange 19 ausgebildete Stößel 20 sind zentrisch zum Federgehäuse 4 angeordnet, wobei die Schubstange 19 in einer Führung des Federgehäuses 4 axial beweglich geführt ist und der Stößel 20 in den Zugring 17 eingreift.

Der Zugring 17 ist koaxial zu den deckungsgleichen Symmetrieachsen 8, 21, 9 der Antriebsstange 19, des Stößel 20 und des zylindrischen Federgehäuses 4 angeordnet und ist mittels einer an der Innenwand des zylindrischen Federgehäuses 4 ausgebildeten Ringführung 22 mit umlaufender Nut axial fixiert und radial beweglich am Federgehäuse 4 gelagert.

Der Zugring 17 besteht aus glasfaserverstärktem Kunststoff und weist einen rechteckigen Ringquerschnitt auf. Die Glasfasern sind in der Art von Jahresringen entlang der Umlaufachse des Zugringes 17 umlaufend erstreckt angeordnet. Der Faserverlauf 15 der Glasfasern ist in der Draufsicht auf den Zugring 17 durch Kreislinien dargestellt.

Der kegelstumpfförmige Stößel 20 weist an seinem freien Ende einen Durchmesser auf, der dem des spannungsfreien Zugringes 17 entspricht. An dem anderen, der Schubstange 19 zugewandten Ende weist der kegelstumpfförmige Stößel 20 einen Durchmesser auf, der dem geweiteten Durchmesser des vollständig gedehnten Zugrings 17 in einer Vorstufe vor seinem Festigkeitsversagen entspricht.

In einem lastfreien, ausgefederten Ausgangszustand der Druckfeder 1.2 befindet sich die Schubstange 19 in einer weit aus dem Federgehäuse 4 ausgefahrenen Ausgangsstellung (Fig. 4a), so dass das freie Ende des Stößels 20 gerade noch im Eingriff mit dem spannungsfreien Zugring 17 ist.

Bei einer Einfederungsstellung der Schubstange 19 (Fig. 4b) ist diese mit einer axial gerichteten Federkraft F beaufschlagt, wobei sich die Schubstange 19 in das Federgehäuse 4 hinein bewegt. Bei der axial gerichteten Bewegung der Schubstange 19 vollführt der kegelstumpfförmige Stößel 20 eine Relativbewegung zu der korrespondierenden konischen Innenfläche des Zugringes 17. Dabei gleitet die Oberfläche des Stößels 20 auf der korrespondierenden Innenfläche des Zugringes 17. Die Oberfläche des Stößels 20 und die Innenfläche des Zugringes 17 sind z.B. durch geringe Oberflächenrauigkeit und/ oder durch einen Gleitfilm entsprechend reibungsarm ausgebildet, damit eine Federfunktion ohne wesentliche Losbrechmomente erzielt wird.

Beim Vortrieb des Stößels 20 nimmt die Ringführung des Zugringes 17 die mittelbare, axial auf den Zugring 17 wirkende Druckkraft auf und hält den Zugring 17 dadurch in einer axial gesicherten Position.

Die auf die Schubstange 19 aufgebrachte Federkraft F wird durch den einfahrenden Stößel 20 entsprechend des Hebelgesetzes verstärkt und mit erheblich kürzerem Weg des Stößels 20 in radialer Richtung als verstärkte Druckkraft gleichmäßig auf die Innenfläche des Zugringes 17 übertragen. Im Ringquerschnitt des Zugrings 17 wird hierdurch eine polarorthotrop wirkende Zugspannung erzeugt, die in der Art von Jahresringen entlang der Umlaufachse des Zugringes 17 gerichtet ist. Der Zugring 17 wird unter der nahezu homogen über den Ringquerschnitt verteilten Zugspannung entlang seiner Umlaufachse gleichmäßig gedehnt, wobei eine weitestgehend vollständige Ausnutzung des Ringquerschnitts für die Energieaufnahme bewirkt wird.

Bei einem maximalen Einfederungszustand der Feder 1.2 unter Maximallast (Fig. 4c), bei der der Bereich des kegelstumpfförmigen Stößels 20 mit dem größten Durchmesser mit der Innenfläche des Zugringes 17 korrespondiert, unterliegt der Zugring 17 der maximalen Zugspannung und ist zugleich die maximal mögliche Dehnung des Zugringes 17 erreicht. Eine weitere Dehnung würde zum Versagen des Zugringes 17 führen, was durch die Geometrie des Stößels 20 und der Führung vermieden ist.

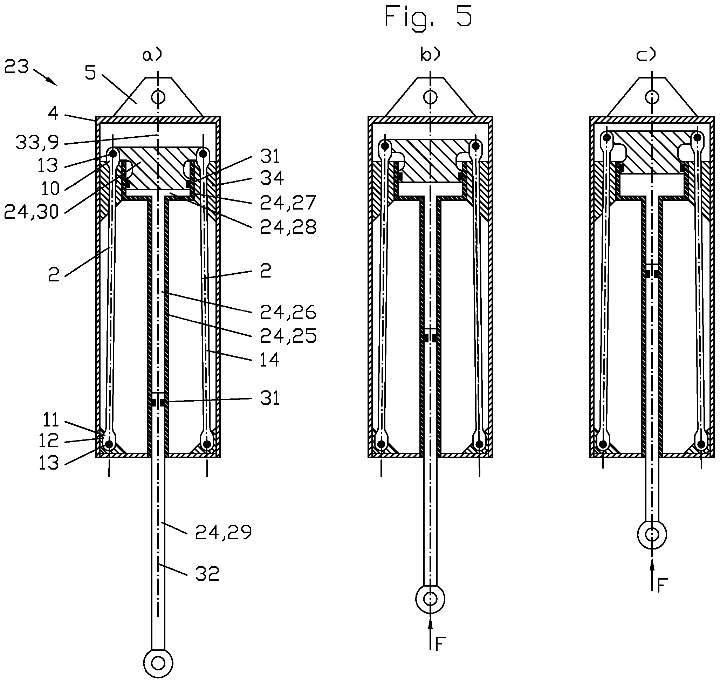

Fig. 5 zeigt eine erfindungsgemäße hydraulische Druckfeder 23 in einem Ausführungsbeispiel mit zwei Zugstäben 2 und einer hydraulischen Kraft-Weg-Übersetzungseinheit 24 in drei Funktionszuständen a, b, c.

Diese Ausführungsform einer Druckfeder 23 umfasst im Unterschied zu den Federvorrichtungen nach Fig. 1, 2 und 4 anstelle der mechanischen Kraft-Weg-Übersetzungseinheit 3 bzw. 18 eine hydraulische Kraft-Weg-Übersetzungseinheit 24. Zur Vermeidung von Wiederholungen sollen nachfolgend nur die sich gegenüber der Federvorrichtung nach Fig. 1 unterscheidenden Merkmale und Bauteile beschrieben werden. Gleiche Bauteile mit gleicher Funktion haben gleiche Bezugszeichen.

Die hydraulische Kraft-Weg-Übersetzungseinheit 24 weist einen mit Hydrauliköl gefüllten, zweistufigen Hydraulikzylinder auf, der in einer Antriebsstufe einen Antriebszylinder 25 mit antriebsseitigem Arbeitsraum 26 und in einer Abtriebsstufe einem Abtriebszylinder 27 mit abtriebsseitigem Arbeitsraum 28 des Hydraulikzylinders umfasst. Beide Arbeitsräume 26, 28 sind miteinander verbundenen.

Antriebszylinder 25 und Abtriebszylinder 27 des Hydraulikzylinders sind in ihrem Durchmesser deutlich abgestuft.

Der Durchmesser des Abtriebszylinders 27 ist im Ausführungsbeispiel 5-fach größer als der Durchmesser des Antriebszylinders 25.

Die hydraulische Kraft-Weg-Übersetzungseinheit 24 weist außerdem als Eingangsstellglied 29 einen Antriebskolben 29 auf, der den antriebsseitigen Arbeitsraum 26 des Antriebszylinders 25 stirnseitig gegenüber der Umgebung begrenzt. Als Ausgangsstellglied 30 der hydraulischen Kraft-Weg-Übersetzungseinheit 24 ist eine Abtriebskolben 30 vorgesehen, der den abtriebsseitigen Arbeitsraum 28 stirnseitig gegenüber der Umgebung begrenzt.

Antriebskolben 29 und Abtriebskolben 30 sind im Antriebs- bzw. Abtriebzylinder 25, 27 jeweils axial beweglich geführt und verfügen über Kolbendichtungen 31, die die Arbeitsräume 26, 28 gegenüber der Umgebung abdichten.

Die Symmetrieachsen 32, 33 des Eingangsstellgliedes 29 und des Ausgangsstellgliedes 30 verlaufen zueinander deckungsgleich, so dass die Wirkrichtung der Kraft-Weg-Übersetzungseinheit 24 linear und entlang dieser kongruenten Symmetrieachsen 32, 33 vorgegeben ist. Die Zugstäbe 2 sind achsensymmetrisch und im Wesentlichen parallel zum zweistufigen Hydraulikzylinder und zur Kraft-Weg-Übersetzungseinheit 24 angeordnet.

Die Kraft-Weg-Übersetzungseinheit 24 ist auch zentrisch zur Symmetrieachse 9 des Federgehäuses 4 angeordnet, wobei der Antriebszylinder 25 fest an der dem Festlager 5 gegenüberliegende Stirnwand des Federgehäuses 4 anschließt und der Abtriebszylinder 27 mittels Befestigungsstege 34 mit der Innenwand des Federgehäuses 4 verbunden ist, so dass keine Relativbewegung gegenüber dem Federgehäuse 4 stattfinden kann.

Der Abtriebskolben 30 ist an seinem äußeren Umfang mittels der Kopfgelenke mit je einem Kopfende 10 der Zugstäbe 2 verbunden. Die Fußenden 11 der Zugstäbe 2 sind jeweils mittels eines Fußgelenkes mit Befestigungslaschen 12 verbunden, welche an der Stirnwand des feststehenden Federgehäuses 4 angeordnet sind, an der auch der Antriebszylinder 25 angeschlossen ist. Die Lagerösen 13 am Kopf- 10 und Fußende 11 zur Verbindung mit Abtriebskolben 30 und Federgehäuse 4 sind mittig zur Längsachse 14 der Zugstäbe 2 angeordnet.

In einem lastfreien, ausgefederten Ausgangszustand der Druckfeder 23 befindet sich der Antriebskolben 29 in einer weit aus dem Federgehäuse 4 ausgefahrenen Ausgangsstellung (Fig. 5a) und die Zugstäbe 2 sind spannungsfrei.

Beim Einfederungsvorgang, bei dem der Antriebskolben 29 mit einer axial gerichteten Federkraft F beaufschlagt wird, verdrängt der einfahrende Antriebskolben 29 das Hydrauliköl im antriebsseitigen Arbeitsraum 26, so dass es in den abtriebsseitigen Arbeitsraum 28 überströmt. Das verdrängte Hydrauliköl treibt so den Abtriebskolben 30 an, der dadurch angehoben wird (Fig. 5b). Die Querschnittsdifferenz beider Kolben 29, 30 bzw. Zylinder 25, 27 bewirkt, dass der Abtriebskolben 30 einen etwa 25-fach geringeren Weg als der Antriebskolben 29 zurücklegt, jedoch eine etwa 25-fach höhere Zugkraft als die eingangs beaufschlagte Federkraft F an die Zugstäbe 2 überträgt. Der Weg des Abtriebskolbens 30 und die zugehörige Zugkraft dehnen die Zugstäbe 2 entlang ihrer Längsachsen 14 gleichmäßig, wobei jeder Zugstab 2 unter der nahezu homogen über dessen Stabquerschnitt verteilten Zugspannung weitestgehend vollständig zur Energieaufnahme ausgenutzt wird.

Bei einem vollständigen Einfederungszustand der Feder 23 unter Maximallast (Fig. 5c) befindet sich der Abtriebskolben 30 in der höchsten Stellung und die Zugstäbe 2 unterliegen der maximalen Zugspannung bei maximal möglicher Dehnung.

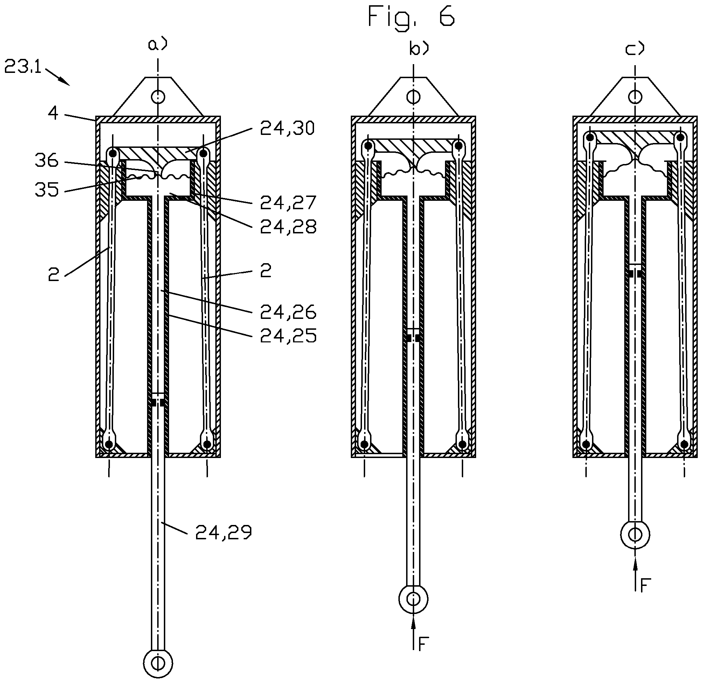

In Fig. 6 ist in drei Funktionszuständen a, b, c eine Druckfeder 23.1 dargestellt, welche im Unterschied zur Druckfeder 23 nach Fig. 5 einen Abtriebskolben 30 mit einer beweglichen Membran 35 aufweist. Die Membran 35 ist im Ausführungsbeispiel metallisch ausgebildet und weist eine ringförmige Rippenstruktur auf. Sie begrenzt unmittelbar den abtriebsseitigen Arbeitsraum 28 und ist am umlaufenden Rand dicht mit der Innenseite des Abtriebszylinders 27 verbunden, wodurch sich eine Kolbendichtung 31 zur Abdichtung des Abtriebszylinders 27 erübrigt. Der Abtriebskolben 30 umfasst außerdem ein Fußteil 36, der mit der Mitte der Membran 35 in Kontakt steht und die Bewegung der Membran 35 an den Kolbenkopf des Abtriebskolbens 30 überträgt.

Im lastfreien, ausgefederten Ausgangszustand der Druckfeder 23.1 befindet sich der Antriebskolben 29 in einer weit aus dem Federgehäuse 4 ausgefahrenen Ausgangsstellung (Fig. 6a). Die Membran 35 schließt in diesem Zustand den abtriebsseitigen Arbeitsraum 28 im Wesentlichen eben ab. Der Abtriebskolben 30 befindet sich demnach im niedrigsten Niveau, bei dem die mit dem Abtriebskolben 30 verbunden Zugstäbe 2 spannungsfrei sind.

Beim Einfederungszustand (Fig. 6b) wölbt sich die Membran 35 unter der Federkraft F und dem hydraulischen Druck des verdrängten Hydrauliköls nach oben und treibt so den Abtriebskolben 30 an.

Bei einem vollständigen Einfederungszustand der Feder 23.1 unter Maximallast (Fig. 6c) ist die maximale Wölbung der Membran 35 erreicht, wobei sich der Abtriebskolben 30 in der höchsten Stellung befindet und die Zugstäbe 2 der maximalen Zugspannung bei maximal möglicher Dehnung unterliegen.

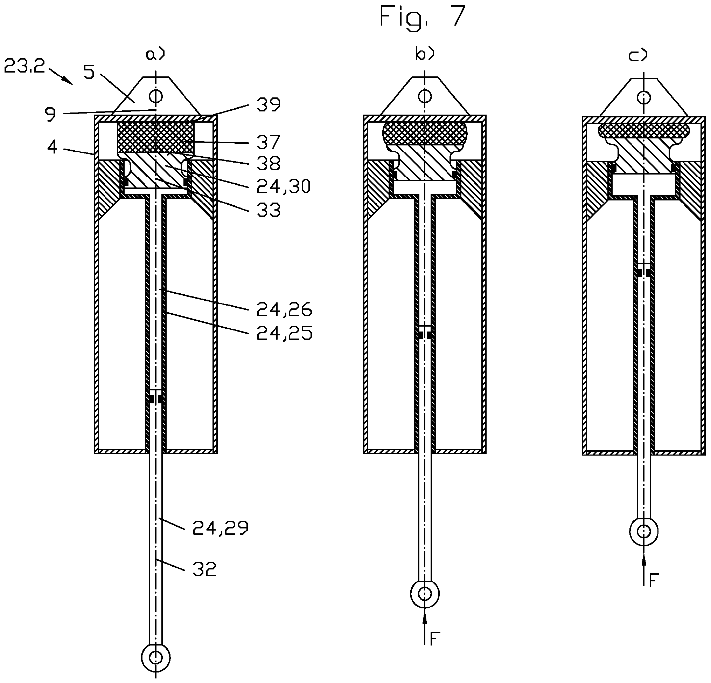

Fig. 7 zeigt eine erfindungsgemäße Druckfeder 23.2 in einem Ausführungsbeispiel mit einem druckspannungsbelastbaren Drucckörper 37 und einer hydraulischen Kraft-Weg-Übersetzungseinheit 24 in drei Funktionszuständen a, b, c.

Im Unterscheid zur Druckfeder 23 nach Fig. 5 findet bei der Federvorrichtung nach diesem Ausführungsbeispiel anstelle von zugspannungsbelastbaren Zugkörpern 2 ein druckspannungsbelastbarer Druckkörper 37 Anwendung. Nachfolgend soll daher nur auf die sich gegenüber der Federvorrichtung nach Fig. 5 unterscheidenden Merkmale und Bauteile eingegangen werden. Gleiche Bauteile mit gleicher Funktion haben gleiche Bezugszeichen.

Der druckspannungsbelastbare Druckkörper 37 nach dem vorliegenden Ausführungsbeispiel ist im lastfreien Ausgangszustand der Druckfeder 23.2 ein zylindrischer Körper aus einem Elastomer mit hoher Steifigkeit (Fig. 7a). Die Steifigkeit bzw. Härte eines Elastomers wird in Shore A gemessen. Der Druckkörper 37 nach dem Ausführungsbeispiel beschränkt sich auf steife Elastomere, die eine Steifigkeit bzw. Härte von 80 Shore A und mehr aufweisen. Der Druckzylinder 37 weist zwei sich gegenüberliegende Anlageflächen 38, 39 auf und ist im Federgehäuse 4 so angeordnet, dass die untere Anlagefläche 38 an einer äußeren Oberfläche des Abtriebskolbens 30 anliegt. Die obere Anlagefläche 39 schließt flächig an einer dem Abtriebskolben 30 zugewandten Innenfläche der Stirnwand des Federgehäuses 4 an, die auch das Festlager 5 aufweist. Der Druckkörper 37 ist symmetrisch zu den Symmetrieachsen 32, 33 des Eingangsstellgliedes 29 und des Ausgangsstellgliedes 30 und damit auch symmetrisch zur Symmetrieachse 9 des Federgehäuses 4 angeordnet. Vorzugsweise sind beide Anlageflächen 38, 39 des Druckkörpers 37 senkrecht zu diesen kongruenten Symmetrieachsen 32, 33, 9 orientiert.

Mit der Aufwärtsbewegung des Abtriebskolbens 30 beim Einfederungsvorgang (Fig. 7b) wird der Druckkörper 37 gegen das Federgehäuse 4 gedrückt. Dabei wird der Druckkörper 37 unter leichtem, seitlichem Ausbeulen gleichmäßig gestaucht, wobei er über seine Anlageflächen 38, 39 und infolgedessen über seine planparallele Querschnittfläche eine nahezu homogene Druckspannung erfährt. Somit kann die Masse des Druckkörpers 37 über den gesamten Querschnitt weitestgehend vollständig zur Energieaufnahme ausgenutzt werden.

Bei einem vollständigen Einfederungszustand der Druckfeder 23.2 unter Maximallast (Fig. 7c) befindet sich der Abtriebskolben 30 in der höchsten Stellung und der Druckkörper 37 unterliegt unter höchster Stauchung einer maximal möglichen Druckspannung über die gesamte Querschnittsfläche.

Beim Ausfedern der Druckfeder 23.2 (nicht dargestellt) bewegt sich der Abtriebskolben 30 in die Ausgangsstellung nach Fig. 7a zurück, wobei der Druckkörper 37 entspannt wird und langsam wieder seine kubische Form annimmt.

Der Druckkörper 37 aus steifem Elastomer wirkt materialbedingt im geringen Maße visko-elastisch. Dagegen wirkt ein Druckkörper 37 aus Titan bei geringerer Dehnung rein elastisch, ohne Dämpfungswirkung. Das Material des Druckkörpers 37 ist je nach Bedarf des Anwendungsfalls wählbar. Die höhere Steifigkeit eines Druckkörpers 37 aus Titan wird durch die Gestaltung einer nicht dargestellten Kraft-Weg-Übersetzungseinheit kompensiert, welche ein entsprechend hohes Kraft-Weg-Übersetzungsverhältnis von beispielsweise 1:50 realisiert.

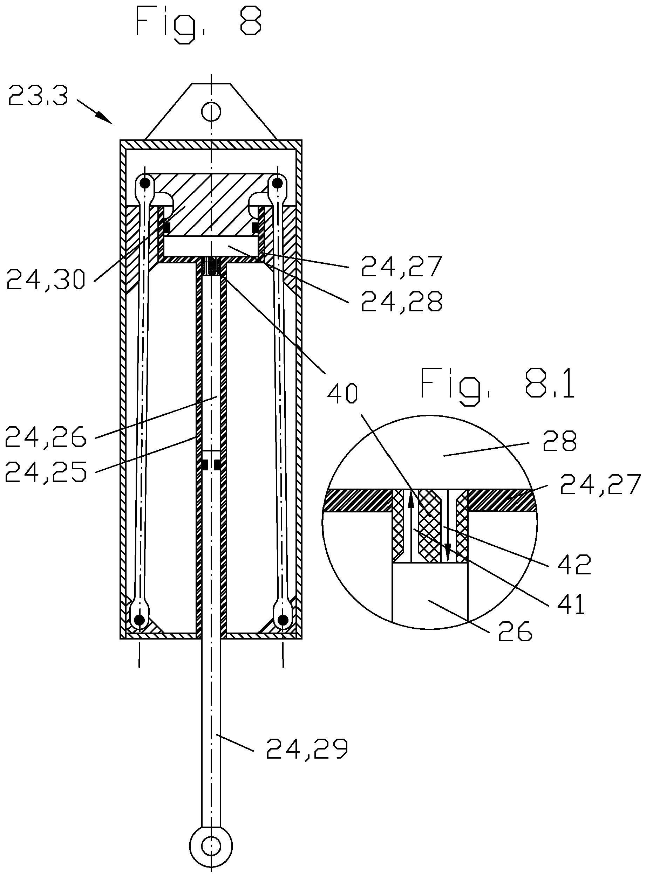

In Fig. 8 ist eine erfindungsgemäße Druckfeder 23.3 analog der Druckfeder 23 nach Fig. 5 dargestellt, welche zusätzlich über ein Dämpfungsglied 40 verfügt. Das Dämpfungsglied ist im vorliegenden Ausführungsbeispiel als ein Ventilblock 40 ausgebildet, der innerhalb des Antriebszylinders 25 am Übergang zum Abtriebszylinder 27 angeordnet ist. Zur Verdeutlichung ist der Ventilblock 40 als vergrößerte Detaildarstellung in Fig. 8.1 gezeigt. Der Ventilblock 40 weist ein Druck-Strömungsventil 41 und ein Saug-Strömungsventil 42 auf, über die das Hydrauliköl vom antriebsseitigen Arbeitsraum 26 in den abtriebsseitige Arbeitsraum 28 strömt und umgekehrt.

Entsprechend dem Strömungswiderstand der Ventile 41, 42 kann der gewünschte Dämpfungsgrad vorgegeben werden. Je kleiner der Ventilquerschnitt ausgeführt oder eingestellt wird, desto stärker wird die Druckfeder 23.3 beim Einfedern bzw. Ausfedern gedämpft.

Druck- und Saug-Strömungsventil 41, 42 haben einen einseitig gerichteten Strömungsdurchgang. In der entgegengesetzten Strömungsrichtung haben sie eine Sperrwirkung. Im Druckbetrieb der hydraulischen Kraft-Weg-Übersetzungseinheit 24, also beim Einfedern der Druckfeder 23.3 und Einfahren des Antriebskolbens 29 strömt das Hydrauliköl durch das Druck-Strömungsventil 41 in den abtriebsseitigen Arbeitsraum 28. Im Saugbetrieb der hydraulischen Kraft-Weg-Übersetzungseinheit 24, also beim Ausfedern der Druckfeder 23.3 und Ausfahren des Antriebskolbens 29 strömt das Hydrauliköl durch das Saug-Strömungsventil 42 in den antriebsseitigen Arbeitsraum 26.

Die einseitig gerichteten Strömungsventile 41, 42 ermöglichen es, den Strömungswiderstand im Druck- bzw. Saugbetrieb unterschiedlich einzustellen, womit verschiedene Dämpfungsraten beim Ein- und Ausfedern verwirklicht werden können.

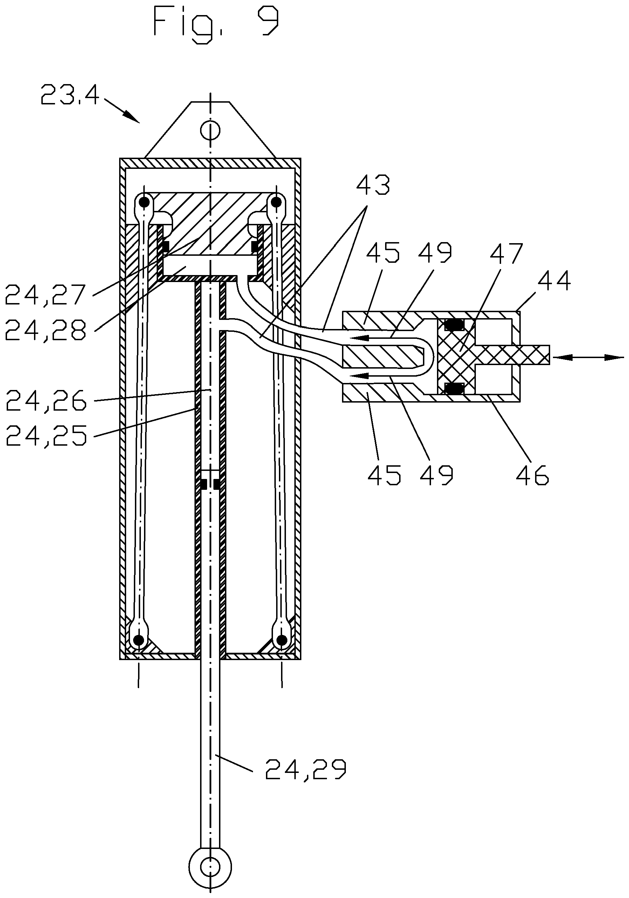

In Fig. 9 ist eine weiterentwickelte Druckfeder 23.4 gemäß der Druckfeder 23 nach Fig. 5 dargestellt. Bezüglich der übereinstimmenden Merkmale und Bauteile wird auf die Beschreibung zur Fig. 5 verwiesen. Nachfolgend werden daher nur die sich unterscheidenden Merkmale und Bauteile beschrieben. Gleiche Bauteile mit gleicher Funktion haben gleiche Bezugszeichen.

Der Antriebszylinder 25 und der Abtriebszylinder 27 der hydraulischen Kraft-Weg-Übersetzungseinheit 24 haben keine direkte Verbindung. Antriebsseitiger und abtriebsseitiger Arbeitsraum 26, 28 sind mittelbar über eine flexible Verbindungsleitung 43 miteinander verbunden, in der eine externe Hydraulikeinheit 44 eingebunden ist. Die externe Hydraulikeinheit 44 umfasst einen Ventilblock 45, ähnlich dem Ventilblock 40 nach Fig. 8, einen Stellzylinder 46 und einen beweglich geführten Stellkolben 47. Der Stellkolben 47 begrenzt einen Ausgleichsarbeitsraum 48, der über den Ventilblock 45 und die flexible Verbindungsleitung 43 mit dem antriebsseitigen und abtriebsseitigen Arbeitsraum 26, 28 in Verbindung steht. Das Hydrauliköl wird beim Einfederungs- und Ausfederungsvorgang der Feder 1 über die Verbindungsleitung 43 durch die externe Hydraulikeinheit 44 geleitet, wobei das Hydrauliköl nacheinander zwei einstellbare Umschalt-Strömungsventile 49 des Ventilblocks 45 passiert. Die Strömungsrichtung der Umschalt-Strömungsventile 49 ist entsprechend der Anforderung im Druck- und Saugbetrieb der hydraulischen Kraft-Weg-Übersetzungseinheit 24 wechselweise umschaltbar. Somit lässt sich die Strömung des Hydrauliköls analog der Ausführung nach Fig. 8 beeinflussen und eine Dämpfungswirkung der Druckfeder 23.4 erzielen. Gegenüber der Ausführung nach Fig. 8 ist der Ventilblock 45 in der externen Hydraulikeinheit 44 besonders leicht zugänglich und damit die Dämpfung auf einfache Weise einstellbar bzw. veränderbar.

Das Hydrauliköl durchströmt außerdem den Stellzylinder 46, wobei das Volumen des Ausgleichsarbeitsraumes 48 durch die Position des Stellkolbens 47 im Stellzylinder 46 bestimmt ist. Die Position des Stellkolbens 47 ist im Ausführungsbeispiel über eine nicht dargestellte Motorspindel einstellbar. Damit kann unabhängig von der Federfunktion der erfindungsgemäßen Druckfeder 23.4 das Gesamtvolumen des antriebsseitigen und abtriebsseitigen Arbeitsraums 26, 28 erhöht oder reduziert werden. In der Folge sind unterschiedliche Abstandspositionen des Eingangsstellgliedes 29, respektive des Antriebskolbens 29, relativ zum Ausgangsstellglied 30, respektive dem Abtriebskolben 30 der hydraulischen Kraft-Weg-Übersetzungseinheit 24 und damit auch relativ zum feststehenden Federgehäuse 4 einstellbar. Die externe Hydraulikeinheit 44 ermöglicht somit eine konstruktiv einfache Verstellbarkeit der Druckfeder 23.4 dahingehend, dass beispielsweise eine Anpassung der Länge der Druckfeder 23.4 an vorgegebene Bauraumbedingungen oder eine wirksame Höhenverstellung der mit der Druckfeder 23.4 verbundenen Fahrzeug-Konstruktion realisiert werden kann.

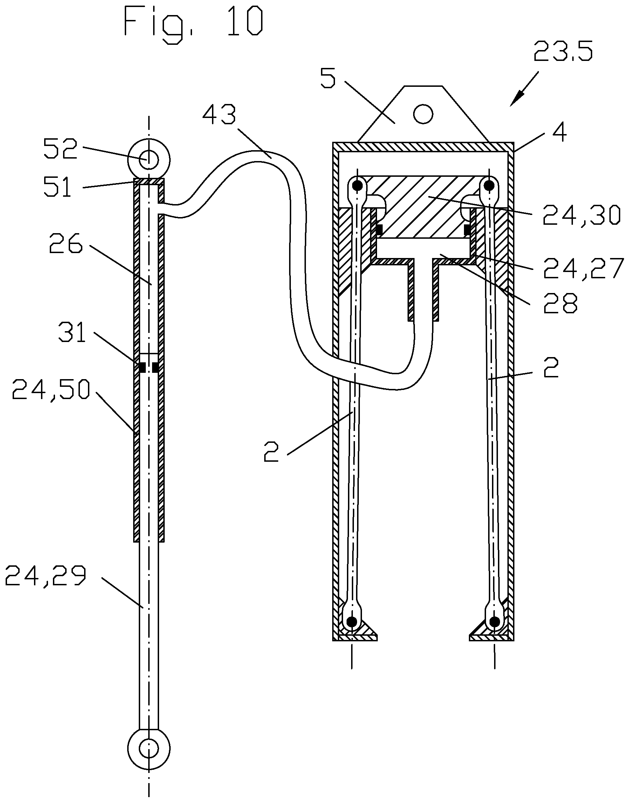

In Fig. 10 zeigt eine Druckfeder 23.5 in einer weiteren Abwandlung der Druckfeder 23 nach Fig. 5. Bei der erfindungsgemäßen Druckfeder 23.5 nach Fig. 10 ist im Unterschied zur Druckfeder 23 nach Fig. 5 die Antriebsstufe der hydraulischen Kraft-Weg-Übersetzungseinheit 24 außerhalb des Federgehäuses 4 angeordnet. Unter Bezugnahme auf die Beschreibung der Druckfeder 23 nach Fig. 5 wird zur Vermeidung von Wiederholungen werden nachfolgend nur die sich unterscheidenden Merkmale und Bauteile beschrieben. Gleiche Bauteile mit gleicher Funktion haben gleiche Bezugszeichen.

Die Antriebsstufe der hydraulischen Kraft-Weg-Übersetzungseinheit 24 weist bei diesem Ausführungsbeispiel einen vom Federgehäuse 4 räumlich getrennt angeordneten externer Antriebszylinder 50 auf, in dem der Antriebskolben 29 geführt ist. An einem dem Antriebskolben 29 gegenüberliegenden Zylinderdeckel 51 des externen Antriebszylinders 50 ist ein Festlager 52 zur Befestigung des externen Antriebszylinders 50 an einer nicht gezeigten Fahrzeugkonstruktion vorgesehen.

Im festen Federgehäuse 4 sind die Abtriebsstufe der hydraulischen Kraft-Weg-Übersetzungseinheit 24 mit dem Abtriebszylinder 27 und dem Abtriebskolben 30 sowie die Zugstäbe 2 angeordnet.

Der antriebsseitige Arbeitsraum 26 des externen Antriebszylinders 50 und der abtriebsseitige Arbeitsraum 28 des Abtriebszylinders 27 sind über die flexible Verbindungsleitung 43 strömungstechnisch miteinander verbunden.

Auf diese Weise kann die schlanke Antriebsstufe mit dem externen Antriebszylinder 50 und dem beweglichen Antriebskolben 29 beispielsweise im beengten Bereich einer Radaufhängung der nicht dargestellten Fahrzeugkonstruktion besser Platz finden.

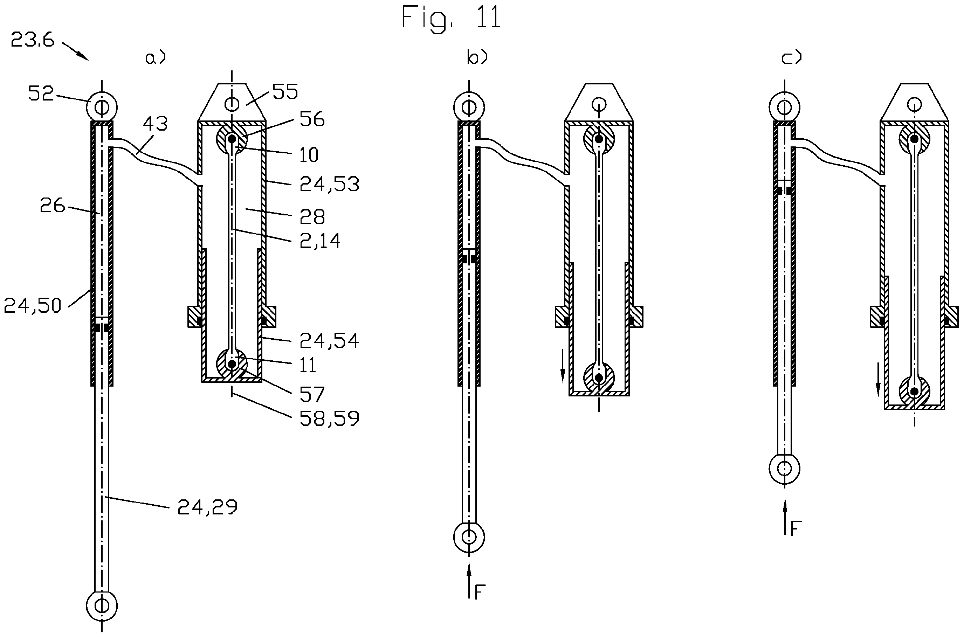

Fig. 11 zeigt in drei Funktionszuständen a, b, c eine Druckfeder 23.6 in einem Ausführungsbeispiel, bei dem in der Abtriebsstufe der hydraulischen Kraft-Weg-Übersetzungseinheit 24 ein integrierter Zugstab 2 angeordnet ist.

Ähnlich der Ausführung der Druckfeder 23.5 nach Fig. 10 ist auch hier die Antriebsstufe und Abtriebsstufe der hydraulischen Kraft-Weg-Übersetzungseinheit 24 räumlich getrennt voneinander ausgebildet. Die Antriebsstufe ist analog der Antriebsstufe nach Fig. 10 ausgebildet und mittels Verbindungsleitung 43 mit dem abtriebsseitigen Arbeitsraum 28 verbunden. Hinsichtlich dieser Merkmale wird auf die vorstehende Beschreibung zu Fig. 10 verwiesen.

Die separierte Abtriebsstufe der hydraulischen Kraft-Weg-Übersetzungseinheit 24 umfasst einen externen Abtriebszylinder 53 für die Ausbildung des abtriebsseitigen Arbeitsraumes 28 und einen beweglichen, hohlprofilartigen, insbesondere hohlzylindrischen Abtriebskolben 54 als Ausgangsstellglied. Der externe Abtriebszylinder 53 und der hohlzylindrischer Abtriebskolben 54 umschließen gemeinsam den abtriebsseitigen Arbeitsraum 28. Der externe Abtriebszylinder 53 ist mittels eines Festlagers 55 feststehend ausgebildet, wobei der hohlzylindrisehe Abtriebskolben 54 axial beweglich im externen Abtriebszylinder 53 geführt ist. Die Verbindungsleitung 43 mündet seitlich in die Zylinderwand des externen Abtriebszylinders 53.

Im abtriebsseitigen Arbeitsraum 28 ist ein Zugstab 2 integriert angeordnet und fixiert. Ein gesondertes feststehendes Federgehäuse zur Befestigung des Abtriebszylinders 53 und des Zugstabes 2 wird in diesem Ausführungsbeispiel daher nicht benötigt.

Das Kopfende 10 des Zugstabes 2 ist mit einem innenseitigen Halter 56 des externen Abtriebszylinders 53 verbunden und dessen Fußende 11 ist mit einem innenseitigen Halter 57 des hohlzylindrischen Abtriebskolbens 54 verbunden. Dabei ist der Zugstab 2 so angeordnet, dass dessen Längsachse 14 kongruent mit den Symmetrieachsen 58, 59 des hohlzylindrischen Abtriebskolbens 54 und des externen Abtriebszylinders 53 verläuft.

Der Zugstab 2 liegt platzsparend und geschützt im Abtriebszylinder 53 und ist vollständig in Hydrauliköl eingebettet. Durch den hydrostatischen Druck, der auf den Zugstab 2 wirkt, erhöht sich dessen Belastbarkeit.

In einem lastfreien, ausgefederten Ausgangszustand der Druckfeder 23.6 befindet sich der hohlzylindrische Abtriebskolben 54 in einer in den Abtriebszylinder 53 eingefahrenen Ausgangsstellung (Fig. 11a), bei dem der Zugstab 2 spannungsfrei ist.

Beim Einfederungsvorgang, bei dem der Antriebskolben 29 mit einer axial gerichteten Federkraft F beaufschlagt wird, drückt dieser das Hydrauliköl aus dem antriebsseitigen Arbeitsraum 26 über die Verbindungsleitung 43 seitlich in den externen Abtriebszylinder 53. Das verdrängte Hydrauliköl vergrößert das Volumen des abtriebsseitigen Arbeitsraumes 28 und treibt den beweglichen Abtriebskolben 54 an, der dadurch ausgefahren wird (Fig. 11b). Die Ausfahrbewegung des Abtriebskolbens 54 mit zugehöriger Zugkraft dehnt den Zugstab 2 entlang seiner Längsachse 14 gleichmäßig, wobei die Zugspannung nahezu homogen über dessen Stabquerschnitt verteilt ist und somit die gesamte Masse des Zugstabes 2 zur Energieaufnahme ausgenutzt wird.

Bei einem vollständigen Einfederungszustand der Feder 23.6 unter Maximallast (Fig. 11c) befindet sich der Abtriebskolben 54 in der weitest möglich ausgefahrenen Stellung und der Zugstab 2 unterliegt der maximalen Zugspannung bei maximal möglicher Dehnung.

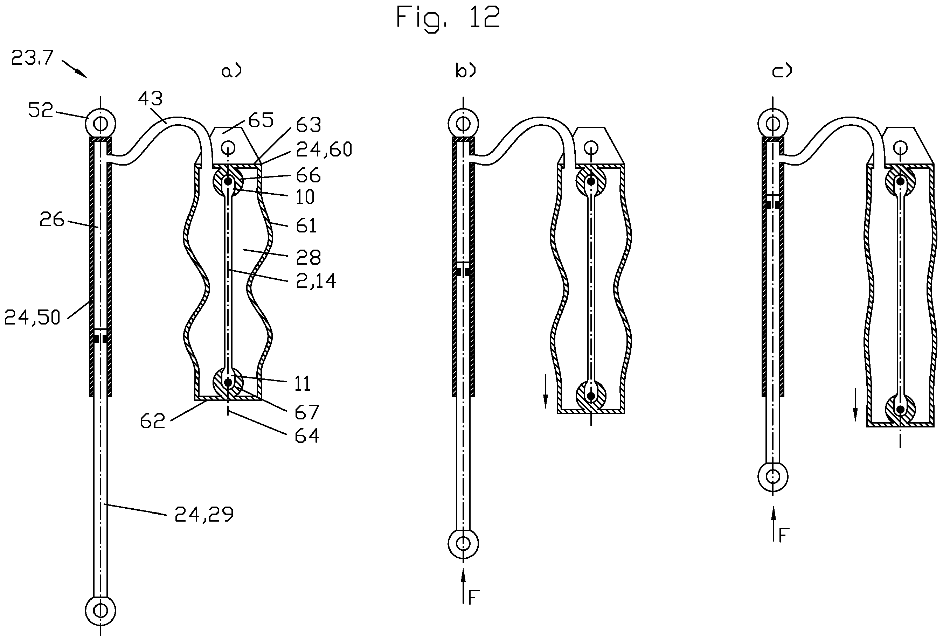

Fig. 12 zeigt in drei Funktionszuständen eine Druckfeder 23.7 in einem alternativen Ausführungsbeispiel zum Ausführungsbeispiel nach Fig. 11. Bei dieser Druckfeder 23.7 ist ebenfalls der integrierte Zugstab 2 im abtriebsseitigen Arbeitsraum 28 der räumlich getrennt ausgebildeten Abtriebsstufe der hydraulischen Kraft-Weg-Übersetzungseinheit 24 angeordnet. Die Antriebsstufe der Kraft-Weg-Übersetzungseinheit 24 ist analog der Ausführung nach Fig. 10 ausgebildet und mittels Verbindungsleitung 43 mit dem abtriebsseitigen Arbeitsraum 28 der Abtriebsstufe der Kraft-Weg-Übersetzungseinheit 24 verbunden.

Im Unterschied zur Ausführung nach Fig. 11 weist die Abtriebsstufe als Ausgangsstellglied einen unidirektional elastischen Abtriebskolben 60 auf, der in einer längserstreckten, rotationssymmetrischen und behälterartigen Geometrie den abtriebsseitigen Arbeitsraum 28 allseitig umschließt. Bei dieser Ausführungsform kommt die Abtriebsstufe im Unterschied zu Ausführung nach Fig. 11 ohne einen Abtriebszylinder 53 und Kolbendichtungen 31 aus. Der behälterartige, unidirektional elastische Abtriebskolben 60 besteht aus einer elastischen Kolbenwand 61 und jeweils einem festen Kolbenboden 62 und festen Kolbendeckel 63. Die Verbindungsleitung 43 mündet in den Kolbendeckel 63 des elastischen Abtriebskolbens 60.

Die Kolbenwand 61 ist durch entsprechende Material- und Formenauswahl derart elastisch ausgebildet, dass der elastische Abtriebskolben 60 im Wesentlichen nur in seiner Längserstreckung dehnbar ist und in seiner radialen und Umfangserstreckung steif ist. So verfügt die Kolbenwand 61 über eine in Längsrichtung des elastischen Abtriebskolbens 60 ausgebildete rotationssymmetrische Wellenstruktur, die gleichförmige, umlaufende konvexe und konkave Ausformungen der Kolbenwand 61 bildet. Der unidirektional elastische Abtriebskolben 60 besteht im Ausführungsbeispiel außerdem aus Faserverbundmaterial, wobei die Faserlagen mit Verstärkungsfasern in Endlos-Wickelungen um den Umfang des Abtriebskolbens herum angeordnet sind. Die Verstärkungsfasern der Wickelungen weisen in Umfangsrichtung eine Faserorientierung mit einem Winkel von etwa 90° zur Längsachse 64 des elastischen Abtriebskolbens 60 auf.

Der unidirektional elastische Abtriebskolben 60 ist mittels eines am Kolbendeckel 63 angeordneten Festlagers 65 einseitig feststehend ausgebildet, so dass der Abtriebskolben 60 in seiner Längserstreckung frei beweglich und expandierbar ist.

Der integrierte Zugstab 2 ist mit seinem Kopfende 10 mit einem deckelseitigen Halter 66 und mit seinem Fußende 11 mit einem bodenseitigen Halter 67 des elastischen Abtriebskolbens 60 verbunden. Dabei ist der integrierte Zugstab 2 so angeordnet, dass dessen Längsachse 14 kongruent mit der Längsachse 64 des elastischen Abtriebskolbens 60 verläuft.

In einem lastfreien, ausgefederten Ausgangszustand der Druckfeder 23.7 hat der elastische Abtriebskolben 60 eine deutlich ausgeprägte Wellenstruktur mit gedrungener Längserstreckung, bei der elastische Abtriebskolben 60 mit kürzestem Längenmaß vorliegt. In diesem Zustand ist der integrierte Zugstab 2 spannungsfrei gelagert (Fig. 12a).

Beim Einfederungsvorgang, bei dem der Antriebskolben 29 mit einer axial gerichteten Federkraft F beaufschlagt wird, wird das Hydrauliköl aus dem antriebsseitigen Arbeitsraum 26 über die Verbindungsleitung 43 in den elastischen Abtriebskolben 60 gedrückt. Das verdrängte Hydrauliköl vergrößert das Volumen des abtriebsseitigen Arbeitsraumes 28 und erhöht den Druck im elastischen Abtriebskolben 60, wobei der allseitige Druck des Hydrauliköls die Kolbenwand 61 des elastischen Abtriebskolbens 60 im Wesentlichen nur axial, in Längsrichtung des Abtriebskolbens 60 dehnt und folglich der elastische Abtriebskolben 60 axialbeweglich in Richtung seines Kolbenbodens 62 gestreckt wird. Dabei flacht die Wellenstruktur der Kolbenwand 61 ab (Fig. 12b). Die Kolbenwand 61 ist in radialer und Umfangserstreckung des elastischen Abtriebskolbens 60 jedoch so steif, dass keine radiale Expansion der Kolbenwand 61 des Abtriebskolbens 60 erzeugt wird. Der behälterartige, unidirektional elastische Abtriebskolbens 60 wird damit nur längengedehnt. Die Druckkräfte des Hydrauliköls beim Einfederungsvorgang werden weitestgehend von dem integrierten Zugstab 2 aufgenommen, der die entsprechende Gegenkraft bereitstellt.

Durch die Streckung des rotationssymmetrischen Abtriebskolbens 60 wird eine axiale Zugkraft auf den zentrisch integrierten Zugstab 2 ausgeübt, die ihn entlang seiner Längsachse 14 gleichmäßig dehnt, wobei die Zugspannung nahezu homogen über dessen Stabquerschnitt verteilt ist und somit die gesamte Masse des Zugstabes 2 zur Energieaufnahme ausgenutzt wird.

Bei einem vollständigen Einfederungszustand der Feder 23.7 unter Maximallast (Fig. 12c) ist der elastische Abtriebskolben 60 vollständig gestreckt, wobei die Wellenstruktur fast gänzlich geglättet ist. In diesen Zustand unterliegt der integrierte Zugstab 2 der maximalen Zugspannung bei maximal möglicher Dehnung.

Beim Ausfedern der Druckfeder 23.7 (nicht dargestellt) nimmt der Druck des Hydrauliköl im abtriebsseitigen Arbeitsraum 28 ab, so dass sich der elastische Abtriebskolben 60 und mit ihm der integrierte Zugstab 2 in die Ausgangsform nach Fig. 12a zurückbilden und entspannen.

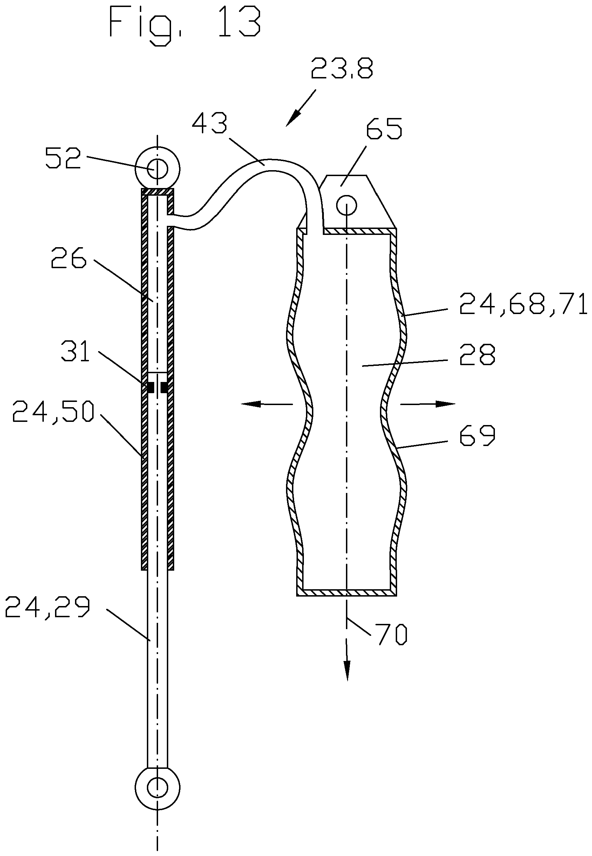

In Fig. 13 ist eine Druckfeder 23.8 in einem alternativen Ausführungsbeispiel zum Ausführungsbeispiel nach Fig. 12 dargestellt.

Im Unterschied zur Druckfeder 23.7 nach Fig. 12 weist die Abtriebsstufe der hydraulischen Kraft-Weg-Übersetzungseinheit 24 einen nahezu allseitig elastischen und zugspannungsbelastbaren Abtriebskolben 68 als Ausgangstellglied auf, der in einer längserstreckten, behälterartigen und rotationssymmetrischen Geometrie den abtriebsseitigen Arbeitsraum 28 allseitig umschließt.

Eine elastische Kolbenwand 69 dieses zugspannungsbelastbaren Abtriebskolbens 68 weist in dessen Längs- und Umfangserstreckung eine Dehnbarkeit mit besonders hoher Dehnsteifigkeit auf.

Dieser Abtriebskolben 68 besteht im Ausführungsbeispiel aus Faserverbundmaterial, speziell aus Endlos-Glasfaser-Epoxydharzverbund, mit sowohl in Längsrichtung des Abtriebskolbens als auch in Umfangsrichtung des Abtriebskolbens 68 orientierten Verstärkungsfasern, wobei die Verstärkungsfasern in Längsrichtung des Abtriebskolbens 68 eine Faserorientierung mit einem Winkel von etwa +/- 10 ° zur Längsachse 70 des Abtriebskolbens 68 aufweisen und die Verstärkungsfasern in Umfangsrichtung eine Faserorientierung mit einem Winkel von etwa 90° zur Längsachse 70 des Abtriebskolbens 68 aufweisen. Entsprechend des gewählten Winkels der Faserorientierung in Längsachse 70 des Abtriebskolbens 68 kann die Dehnungssteifigkeit der Kolbenwand 69 in Längserstreckung beeinflusst werden.

Die Verstärkungsfasern in Längsrichtung des Abtriebskolbens 68 bestehen aus Glasfaser, wogegen die Verstärkungsfasern in Umfangsrichtung aus hochsteifen Kohlenstofffasern bestehen. Durch die entsprechende Materialwahl der Verstärkungsfasern kann ein bestimmtes Verhältnis der Längen- und Umfangsdehnung des Abtriebskolbens 68 eingestellt werden. Im Ausführungsbeispiel führt die Materialauswahl zu einer bevorzugten Längendehnung des Abtriebskolbens 68, der sich damit an schmale Platzverhältnisse anpasst.

Zusätzlich kann die Dehnbarkeit und Dehnungssteifigkeit der Kolbenwand 69 des Abtriebskolbens 68 durch eine entsprechende Ausprägung der Wellenstruktur-Geometrie der Kolbenwand 69 eingestellt werden.

Die Druckkräfte des Hydrauliköls beim Einfederungsvorgang werden infolge der Dehnungssteifigkeit der Kolbenwand 69 weitestgehend vom behälterartigen Abtriebskolben 68 selbst aufgenommen, der somit die entsprechende Gegenkraft bereitstellt.

Damit ist der zugspannungsbelastbare Abtriebskolben 68 geeignet zugleich die Funktion eines Zugkörpers 71 zu übernehmen, der mit einer richtungskombinierten, in Längs- und Umfangserstreckung ausgeprägten, Zugspannungsbelastbarkeit und Dehnbarkeit ausgestattet ist. Die Verstärkungsfasern in Längsrichtung des Abtriebskolbens 68 lassen den Zugkörper 71 wie ein Zugstab mit Zugspannungsbelastbarkeit in axialer Erstreckung wirken und die Verstärkungsfasern in Umfangsrichtung lassen den Zugkörper 71 wie ein Zugring mit Zugspannungsbelastbarkeit in polarorthotroper Erstreckung wirken. Der Zugkörper 71 ist bei diesem Ausführungsbeispiel mit einer an die Form des Abtriebskolben 68 angepassten, längserstreckten und im Wesentlichen hohlzylindrischen Körperform integrativ im Abtriebskolben 68 ausgebildet. Der Abtriebskolben 68, als Ausgangsstellglied der hydraulischen Kraft-Weg-Übersetzungseinheit 24, und der Zugkörper 71 bilden damit eine körperliche und funktionale Einheit.

Beim Einfederungsvorgang der Druckfeder 23.8, bei dem der Antriebskolben 29 mit einer axial gerichteten Federkraft F beaufschlagt wird, wird das Hydrauliköl aus dem antriebsseitigen Arbeitsraum 26 über die Verbindungsleitung 43 in den elastischen, zugspannungsbelastbaren Abtriebskolben 68 gedrückt. Das verdrängte Hydrauliköl vergrößert das Volumen des abtriebsseitigen Arbeitsraumes 28 und erhöht den Druck im Abtriebskolben 68, wobei die allseitig wirkenden Druckkräfte des Hydrauliköls eine Zugspannung in der Kolbenwand 69 in Längs- und Umfangsrichtung des elastischen, zugspannungsbelastbaren Abtriebskolben 68 erzeugen, infolgedessen die Kolbenwand 69 des Abtriebskolbens 68 geringfügig gedehnt wird und dabei der Abtriebskolben 68 in Längs- und Umfangsrichtung gestreckt wird. Infolge der Faserorientierung und -beschaffenheit der Verstärkungsfasern wird der Abtriebskolben 68 unter geringen radialen Ausformungen der Kolbenwand 69 vorzugsweise längsgedehnt.

Die Zugspannung wird infolge der Rotationssymmetrie des Abtriebskolbens 68 gleichmäßig, nahezu homogen über den Wandquerschnitt der Kolbenwand 69 verteilt; somit kann die gesamte Masse der Kolbenwand 69 zur Energieaufnahme ausgenutzt werden.

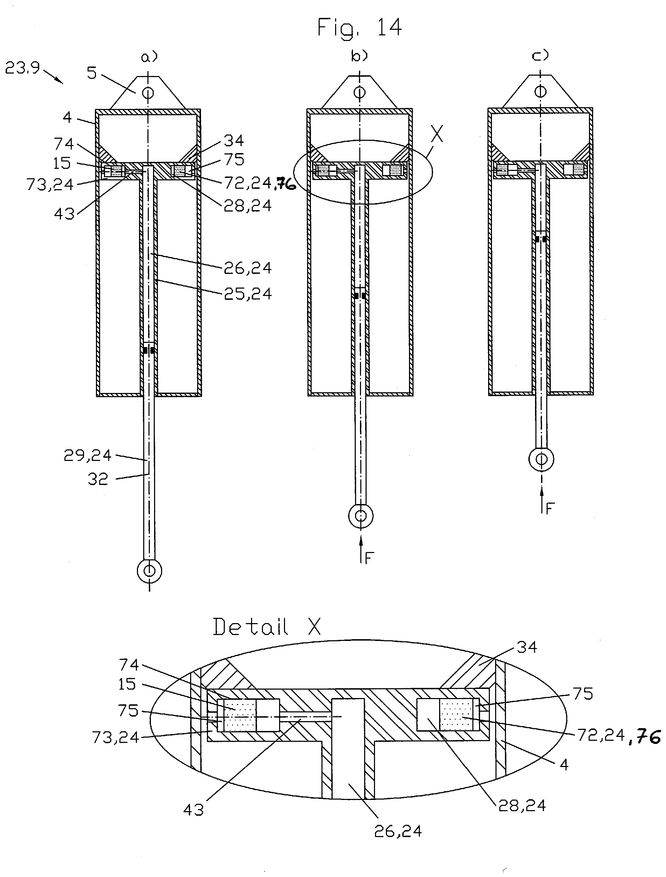

Fig. 14 zeigt eine erfindungsgemäße Druckfeder 23.9 mit einer hydraulischen Kraft-Weg-Übersetzungseinheit 24 in drei Funktionszuständen a, b, c, wobei die hydraulische Kraft-Weg-Übersetzungseinheit 24 einen ringförmigen, zugspannungsbelastbaren Abtriebskolben 72 als Ausgangstellglied aufweist.

Das Federgehäuse 4, die Antriebsstufe der Kraft-Weg-Übersetzungseinheit 24 und das Eingangsstellglied 29 sind mit denjenigen nach Fig. 5 identisch, weshalb diesbezüglich auf die Beschreibung zur Fig. 5 verwiesen wird. Nachfolgend werden daher nur die sich unterscheidenden Merkmale und Bauteile beschrieben. Gleiche Bauteile mit gleicher Funktion haben gleiche Bezugszeichen.

Die Abtriebsstufe der Kraft-Weg-Übersetzungseinheit 24 umfasst eine Abtriebstrommel 73, die den umlaufenden abtriebsseitigem Arbeitsraum 28 bildet. Als Ausgangsstellglied der hydraulischen Kraft-Weg-Übersetzungseinheit 24 ist der ringförmige, zugspannungsbelastbarer Abtriebskolben 72 vorgesehen, der den abtriebsseitigen Arbeitsraum 28 stirnseitig gegenüber der Umgebung begrenzt.

Die zueinander zugewandten Flächen des ringförmigen Abtriebskolbens 72 und der Abtriebstrommel 73 verfügen jeweils über eine Dichtgleitfläche 74, wodurch der ringförmige Abtriebskolben 72 in der Abtriebstrommel 73 radial beweglich gelagert ist und der Arbeitsraum 28 gegenüber einer äußeren umlaufenden Belüftungskammer 75 der Abtriebstrommel 73 abgedichtet ist. Die umlaufende Belüftungskammer 75 steht mit der Umgebung in Verbindung.

Der Antriebszylinder 25 und die Abtriebstrommel 73 der hydraulischen Kraft-Weg-Übersetzungseinheit 24 haben keine direkte Verbindung. Antriebsseitiger und abtriebsseitiger Arbeitsraum 26, 28 sind über eine Verbindungsleitung 43 miteinander verbunden. Die Verbindungsleitung 43 mündet in den gekrümmten Boden der Abtriebstrommel 73.

Die Abtriebstrommel 73 und der ringförmige Abtriebskolben 72 sind koaxial zu den deckungsgleichen Symmetrieachsen 32, 9 des Antriebskolbens 29 und des zylindrischen Federgehäuses 4 angeordnet, wobei die Abtriebstrommel 73 mittels Befestigungsstege 34 fest am Federgehäuse 4 gehalten ist.

Der beweglich gelagerte ringförmige Abtriebskolben 72 weist in seiner radialen Erstreckung eine Dehnbarkeit mit bestimmter Dehnsteifigkeit auf. Die Druckkräfte des Hydrauliköls beim Einfederungsvorgang werden infolge der Dehnungssteifigkeit weitestgehend vom ringförmigen Abtriebskolben 72 aufgenommen, der somit die entsprechende Gegenkraft bereitstellt.

Damit ist der ringförmige Abtriebskolben 72 geeignet zugleich die Funktion eines zugspannungsbelastbaren Zugkörpers 76 zu übernehmen, der in Form eines Zugringes, speziell eines Kolbenzugringes 76, integrativ im ringförmigen Abtriebskolben 72 ausgebildet ist. Der ringförmige Abtriebskolben 72, als Ausgangsstellglied der hydraulischen Kraft-Weg-Übersetzungseinheit 24, und der Kolbenzugring 76, als Zugkörper, bilden damit eine körperliche und funktionale Einheit.

Der ringförmige Abtriebskolben 72 mit integrativem Kolbenzugring besteht aus glasfaserverstärktem Kunststoff und weist einen rechteckigen Ringquerschnitt auf. Die Glasfasern sind in der Art von Jahresringen entlang der Umlaufachse des Kolbenzugringes 76 umlaufend erstreckt angeordnet. Der Faserverlauf 15 der Glasfasern ist in der Schnittdarstellung durch Punkte dargestellt. Die Verstärkungsfasern in Umfangsrichtung bewirken eine Zugspannungsbelastbarkeit des Kolbenzugringes 76 in polarorthotroper Erstreckung.

In einem lastfreien, ausgefederten Ausgangszustand der Zugfeder 23.9 befindet sich der Antriebskolben 29 in einer weit aus dem Federgehäuse 4 ausgefahrenen Ausgangsstellung und der ringförmige Abtriebskolben 72 in einer Stellung nahe dem Boden der Abtriebstrommel 73, bei der der integrative Kolbenzugring 76 spannungsfrei ist (Fig. 14a).

Beim Einfederungsvorgang nach Fig. 14b wird die auf den Antriebskolben 29 aufgebrachte Federkraft F entsprechend des Hebelgesetzes der hydraulischen Kraft-Weg-Übersetzungseinheit 24 verstärkt, in dem das Hydrauliköl aus dem antriebsseitigen Arbeitsraum 26 über die Verbindungsleitung 43 in den abtriebsseitigen Arbeitsraumes 28 verdrängt wird und der erhöhte Druck in dem wesentlich kleineren Arbeitsraum 28 der Abtriebstrommel 73 eine gleichmäßige, radial wirkende Druckkraft auf eine Innenfläche des ringförmigen Abtriebskolbens 72 ausübt, der dadurch mit erheblich kürzerem Weg in radialer Richtung geweitet wird. Dabei wird Luft aus der Belüftungskammer 75 ausgetrieben. Zur Verdeutlichung der Details und der Vorgänge in der Abtriebstrommel 73 mit dem ringförmigen Abtriebskolben 72 ist in einer Detaildarstellung X ein Ausschnitt aus der Fig. 14b vergrößert dargestellt.

Im Ringquerschnitt des ringförmigen Abtriebskolbens 72 bzw. des Kolbenzugringes 76 wird eine polarorthotrop wirkende Zugspannung erzeugt, die in der Art von Jahresringen entlang der Umlaufachse des Kolbenzugringes 76 gerichtet ist. Der Kolbenzugring 76 wird unter der nahezu homogen über den Ringquerschnitt verteilten Zugspannung entlang seiner Umlaufachse gleichmäßig gedehnt, wobei eine weitestgehend vollständige Ausnutzung des Ringquerschnitts für die Energieaufnahme bewirkt wird.

Bei einem vollständigen Einfederungszustand der Feder 23.9 unter Maximallast (Fig. 14c), ist der ringförmige Abtriebskolben 72 bzw. Kolbenzugring 76 maximal geweitet und unterliegt der maximal möglichen Zugspannung. Eine Dehnung bis zum Versagen ist durch Erreichen der äußeren Begrenzungswand der Belüftungskammer 75 vermeiden.

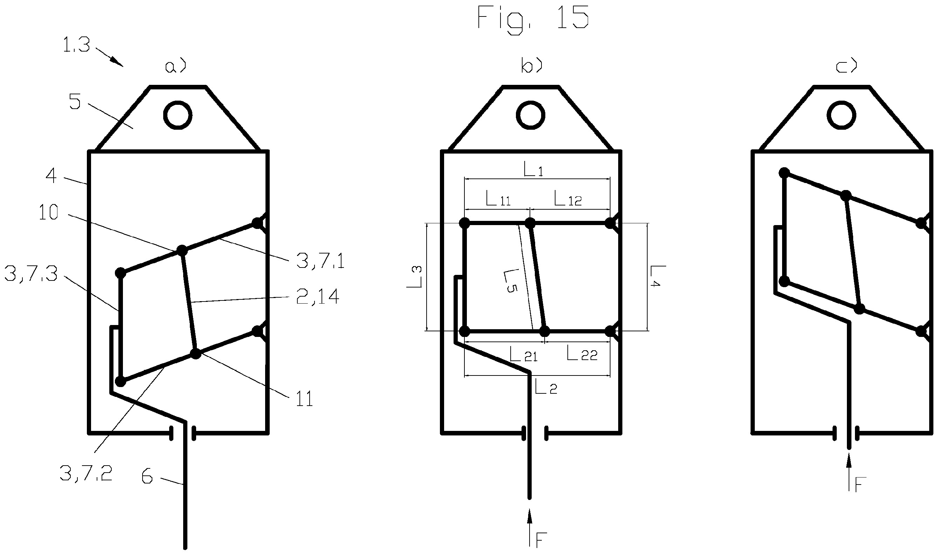

Fig. 15 zeigt in einer schematischen Darstellung eine weitere erfindungsgemäße Ausführung einer mechanischen Druckfeder 1.3 mit einem Zugstab 2 und einer mechanischen Kraft-Weg-Übersetzungseinheit 3 in drei Funktionszuständen.

Der Zugstab 2 und die Kraft-Weg-Übersetzungseinheit 3 sind in einem feststehenden Federgehäuse 4 angeordnet, welches ein Festlager 5 zur Befestigung der Feder 1.3 aufweist.

Die mechanische Kraft-Weg-Übersetzungseinheit 3 besteht aus einem Vierpunkt-Hebelgestänge 3, welches mit zwei beweglichen Hebestangen 7.1, 7.2 und einer die beweglichen Hebestangen 7.1, 7.2 verbindenden Hebelstange 7.3 bestückt ist. Die beweglichen Hebestangen 7.1 und 7.2 bilden das Ausgangstellglied 7 der mechanischen Kraft-Weg-Übersetzungseinheit 3. Als Eingangsstellglied 6 der mechanischen Kraft-Weg-Übersetzungseinheit 3 ist eine beweglich geführte Antriebsstange 6 vorgesehen.

Die Antriebsstange 6 ist zentrisch zum Federgehäuse 4 angeordnet und in einer Führung des Federgehäuses 4 axial beweglich geführt.

Die Hebelstangen 7.1, 7.2 sind mit jeweils einer Länge L₁ und L₂ gleich lang. Die Länge L₁ und L₂ beträgt im Ausführungsbeispiel 100 mm. Das eine Ende der Hebelstangen 7.1, 7.2 ist mit je einem äußeren Gelenk am Federgehäuse 4 drehbeweglich angebracht. Die Anordnung der beiden Hebelstangen 7.1, 7.2 am Federgehäuse 4 erfolgt so, dass deren äußeren Gelenke mit einer Länge L₄ zueinander beabstandet sind. Der Abstand bzw. die Länge L₄ beträgt im Ausführungsbeispiel 75 mm. An ihren anderen Enden sind die Hebelstangen 7.1, 7.2 mittels zweier zentraler Gelenke mit der verbindenden Hebelstange 7.3 drehbeweglich verbunden, die eine Länge L₃ aufweist, die dem Abstand L₄ der Hebelstangen 7.1, 7.2 am Federgehäuse 4 entspricht. Durch diese Anordnung der Hebelstangen 7.1, 7.2, 7.3 ist ein Parallelogramm-artiges Vierpunkt-Hebelgestänge gebildet. An der Hebelstange 7.3 des Vierpunkt-Hebelgestänges greift die Antriebsstange 6 an.

Der aus glasfaserverstärktem Kunststoff bestehende Zugstab 2 ist zwischen den Hebelstangen 7.1, 7.2 drehbeweglich aber positionsfest eingebunden, in dem das Kopfende 10 und das Fußende 11 des Zugstabes 2 mit jeweils der Hebelstange 7.1 bzw. 7.2 drehbeweglich verbunden ist. Die Drehachsen der äußeren und zentralen Gelenke der Hebelstangen 7.1, 7.2 und die des Kopfgelenkes und Fußgelenkes des Zugstabes 2 sind gleichermaßen senkrecht zur Blattebene in Fig. 15 gerichtet.

Die Anschlusspunkte des Kopfendes 10 und des Fußendes 11 des Zugstabes 2 an den Hebelstangen 7.1, 7.2 befinden sich in einem das Übersetzungsverhältnis bestimmenden unterschiedlichem Abstand von den äußeren und den zentralen Gelenken der Hebelstangen 7.1, 7.2. Die Lage des Anschlusspunktes des Kopfendes 10 gliedert die Hebelstange 7.1 in zwei unterschiedlich lange Stangenabschnitte. Der linke Stangenabschnitt der Hebelstange 7.1 hat im Ausführungsbeispiel eine Länge L₁₁ von 45 mm, wogegen der rechte Stangenabschnitt der Hebelstange 7.1 eine Länge L₁₂ von 55 mm hat. Ebenso gliedert die Lage des Anschlusspunktes des Fußendes 11 die Hebelstange 7.2 in zwei unterschiedlich lange Stangenabschnitte, wobei mit umgekehrten Längenverhältnis der linke Stangenabschnitt der Hebelstange 7.2 eine Länge L₂₁ von 55 mm und der rechte Stangenabschnitt der Hebelstange 7.2 eine Länge L₂₂ von 45 mm hat.

Die Anordnung des Zugstabes 2 ergibt sich damit unrechtwinklig in Bezug auf die Lage der Hebelstangen 7.1, 7.2. Der Zugstab 2 hat nach dem vorliegenden Ausführungsbeispiel im lastfreien Ausgangszustand nach Fig. 15a eine Länge L₅ von 72 mm.

In diesem lastfreien, ausgefederten Ausgangszustand der Druckfeder 1.3 befindet sich die Antriebsstange 6 in einer weit aus dem Federgehäuse 4 ausgefahrenen Ausgangsstellung (Fig. 15a) und das Vierpunkt-Hebelgestänge 3 bildet ein Parallelogramm, in dem der Zugstab 2 spannungsfrei angeordnet ist.

Bei der Beaufschlagung der Antriebsstange 6 mit einer axial gerichteten Federkraft F bewegt sich diese in das Federgehäuse 4 hinein, wobei die Hebelstangen 7.1, 7.2 um die Drehachse ihrer äußeren Gelenke bewegt werden. Bei einer Mittelstellung (Fig. 15b), bei der das Vierpunkt-Hebelgestänge 3 annähernd ein Rechteck bildet, stehen die Hebelstangen 7.1, 7.2 in etwa horizontal, wobei die Hebelstangen 7.1, 7.2, 7.3 auf Biegung beansprucht werden. Entsprechend der Biegebelastung bestehen die Hebelstangen 7.1, 7.2, 7.3 aus sehr biegesteifen Material, wie z.B. aus Stahl.

Die Anschlusspunkte des Kopfendes 10 und des Fußendes 11 des Zugstabes 2 an den Hebelstangen 7.1, 7.2 bewegen sich dabei etwas voneinander weg, so dass der an den Hebelstangen 7.1, 7.2 positionsfest eingebundene Zugstab 2 eine axiale Zugkraft erfährt und in Richtung seiner Längsachse 14 gedehnt wird. Der Zugstab 2 ist einer gleichmäßigen Zugspannung ausgesetzt, die über den Stabquerschnitt quer zur Längsachse 14 des Zugstabes 2 nahezu homogen verteilt ist. Damit kann die Masse des Zugstabes 2 weitestgehend vollständig zur Energieaufnahme ausgenutzt werden.

Die auf die Antriebsstange 6 aufgebrachte Federkraft F wird mittels des Vierpunkt-Hebelgestänges 3 nach diesem Ausführungsbeispiel mit einem Übersetzungsverhältnis von etwa 1:12 entsprechend des Hebelgesetzes verstärkt und somit eine etwa 12-fach verstärkte Zugkraft auf den Zugstab 2 übertragen.

Bei einem maximalen Einfederungszustand der Feder 1.3 unter Maximallast (Fig. 15c) befindet sich die Antriebsstange 6 in einer weitest möglichen eingefahrenen Stellung und die Hebelstangen 7.1, 7.2 in einer Endstellung, in der das Vierpunkt-Hebelgestänge 3 in etwa ein gespiegeltes Parallelogramm gegenüber der lastfreien Ausgangsstellung bildet.

Die Anschlusspunkte des Kopfendes 10 und des Fußendes 11 des Zugstabes 2 an den Hebelstangen 7.1, 7.2 befinden sich dabei in einem weitest möglichem Abstand voneinander, wobei der Zugstab 2 einer maximalen Zugspannung bei maximal möglicher Dehnung unterliegt. Der Zugstab wird in der Endstellung nach Fig. 15c um 6% auf eine Länge L₅ von 77 mm gedehnt. Das Übersetzungsverhältnis des Weges des Eingangsstellgliedes 6 zur Längenänderung des Abstandes des Ausgangsstellgliedes 7.1, 7.2 an den Anschlusspunkten des Zugstabes 2 beträgt dabei etwa 12:1, d.h. auf den Zugstab wird nur ein Zwölftel des auf das Eingangsstellgliedes 6 aufgebrachten Federweges übertragen.

Die Erfindung ist nicht auf die vorstehend beschriebenen Ausführungsbeispiele beschränkt. Vielmehr sind in der Kombination der Merkmale der vorgestellten Zug- und Druckfedern 1 bis 1.3, 23 bis 23.9 entsprechend weitere vorteilhafte Ausgestaltungen der erfindungsgemäßen Feder denkbar, die von der Erfindung umfasst sind.

### Bezugszeichenliste

- 1: mechanische Feder, Druckfeder, Zugfeder, .1, .2, .3
- 2: Zugkörper, Zugstab
- 3: mechanische Kraft-Weg-Übersetzungseinheit, Hebelei, Hebelgestänge, Vierpunkt-Hebelgestänge
- 4: Federgehäuse
- 5: Festlager des Federgehäuses
- 6: Eingangsstellglied, Antriebsstange
- 7: Ausgangstellglied, Hebelstange, .1, .2, .3
- 8: Symmetrieachse Eingangsstellglied, Antriebsstange
- 9: Symmetrieachse des zylindrischen Federgehäuses
- 10: Kopfende des Zugstabes
- 11: Fußende des Zugstabes
- 12: Befestigungslasche
- 13: Lageröse
- 14: Längsachse des Zugstabes
- 15: Faserverlauf der Kohlenstofffasern, der Glasfasern
- 16: Faserschlinge
- 17: Zugkörper, Zugring
- 18: mechanische Kraft-Weg-Übersetzungseinheit, Konusgestänge
- 19: Eingangsstellglied, Schubstange
- 20: Ausgangsstellglied, Stößel
- 21: Symmetrieachse Ausgangsstellglied, Stößel
- 22: Ringführung
- 23: hydraulische Feder, Druckfeder, .1 bis .9
- 24: hydraulischen Kraft-Weg-Übersetzungseinheit
- 25: Antriebszylinder
- 26: antriebsseitiger Arbeitsraum
- 27: Abtriebszylinder
- 28: abtriebsseitiger Arbeitsraum
- 29: Eingangsstellglied, Antriebskolben
- 30: Ausgangsstellglied, Abtriebskolben
- 31: Kolbendichtung
- 32: Symmetrieachse Eingangsstellglied, Antriebskolben
- 33: Symmetrieachse Ausgangsstellglied, Abtriebskolben
- 34: Befestigungssteg
- 35: Membran des Abtriebskolbens
- 36: Fußteil des Abtriebskolbens
- 37: Druckkörper, Druckzylinder
- 38: untere Anlagefläche
- 39: obere Anlagefläche
- 40: Dämpfungsglied, Ventilblock
- 41: Druck-Strömungsventil
- 42: Saug-Strömungsventil
- 43: Verbindungsleitung
- 44: externe Hydraulikeinheit
- 45: Dämpfungsglied, Ventilblock
- 46: Stellzylinder
- 47: Stellkolben
- 48: Ausgleichsarbeitsraum
- 49: Umschalt-Strömungsventil
- 50: externe Antriebszylinder
- 51: Zylinderdeckel
- 52: Festlager des externen Antriebszylinders
- 53: externen Abtriebszylinder
- 54: Ausgangstellglied, hohlzylindrischer Abtriebskolben
- 55: Festlager des externen Abtriebszylinders
- 56: Halter des externen Abtriebszylinders
- 57: Halter des hohlzylindrischen Abtriebskolbens
- 58: Symmetrieachse, Längsachse des hohlzylindrischen Abtriebskolbens
- 59: Symmetrieachse, Längsachse des externen Abtriebszylinders
- 60: Ausgangsstellglied, behälterartiger, unidirektional elastischer Abtriebskolben
- 61: elastische Kolbenwand
- 62: Kolbenboden
- 63: Kolbendeckel
- 64: Symmetrieachse, Längsachse des elastischen Abtriebskolbens
- 65: Festlager des elastischen Abtriebskolbens
- 66: deckelseitigen Halter des elastischen Abtriebskolbens
- 67: bodenseitigen Halter des elastischen Abtriebskolbens
- 68: Ausgangstellglied, behälterartiger, zugspannungsbelastbarer Abtriebskolben
- 69: Kolbenwand
- 70: Symmetrieachse, Längsachse des zugspannungsbelastbaren Abtriebskolbens
- 71: Zugkörper, Hohlprofil-Zugkörper
- 72: Ausgangstellglied ringförmiger, zugspannungsbelastbarer Abtriebskolben
- 73: Abtriebstrommel
- 74: Dichtgleitfläche
- 75: Belüftungskammer
- 76: Zugkörper, Kolbenzugring

- F: Federkraft
- L₁: Länge der Hebelstange 7.1
- L₂: Länge der Hebelstange 7.2
- L₃: Länge der Hebelstange 7.3
- L₄: Abstand der Hebelstangen 7.1, 7.2 am Federgehäuse
- L₅: Länge des Zugstabes
- L₁₁: Länge des linken Stangenabschnitts d. Hebelstange 7.1
- L₁₂: Länge des rechten Stangenabschnitts d. Hebelstange 7.1
- L₂₁: Länge des linken Stangenabschnitts d. Hebelstange 7.2
- L₂₂: Länge des rechten Stangenabschnitts d. Hebelstange 7.2

## Patentansprüche

1. Feder (1, 23) mit wenigstens einem zugspannungsbelastbaren Zugkörper (2, 17, 71, 76) geringer Dehnbarkeit, und mit einer auf die geringe Dehnbarkeit des Zugkörpers (2, 17, 71, 76) abgestimmten Kraft-Weg-Übersetzungseinheit (3, 18, 24) zur Kraft-Weg-Übersetzung einer Federkraft F, wobei die Kraft-Weg-Übersetzungseinheit (3, 18, 24) die an einem beweglich ausgebildeten Eingangsstellglied (6, 19, 29) über eine Wegstrecke beaufschlagte Federkraft F in einem bestimmten Kraft-Weg-Übersetzungsverhältnis in eine hohe Kraft an einem beweglich ausgebildeten Ausgangsstellglied (7, 20, 30, 54, 60, 68, 72) umwandelt, welche vom zugspannungsbelastbaren Zugkörper (2, 17, 71, 76) aufgenommen wird, wobei das Ausgangsstellglied (7, 20, 30, 54, 60, 68, 72) derart mit dem Zugkörper (2, 17, 71, 76) in Wirkverbindung steht, dass der Zugkörper (2, 17, 71, 76) im Wesentlichen nur eine Zugspannung im Zugkörper erfährt.

2. Feder nach Anspruch 1, **dadurch gekennzeichnet, dass** der Zugkörper als ein Zugstab (2) oder als ein Zugring (17) ausgebildet ist.

3. Feder nach Anspruch 1 oder 2, **dadurch gekennzeichnet, dass** der Zugkörper (2, 17, 71, 76) aus Faserverbundmaterial, vorzugsweise aus kohlenstofffaserverstärktem oder glasfaserverstärktem Kunststoff, besteht.

4. Feder nach Anspruch 3, **dadurch gekennzeichnet, dass** die Verstärkungsfasern des Faserverbundmaterials entlang einer Längsachse (14) des Zugstabes (2, 71) bzw. entlang einer Umlaufrichtung des Zugringes (17, 71, 76), vorzugsweise durchgehend erstreckt, angeordnet sind.

5. Feder nach Anspruch 3 oder 4, **dadurch gekennzeichnet, dass** am Zugkörper (2) eine Lageröse (13) ausgebildet ist und die Verstärkungsfasern als eine zumindest teilweise um die Lageröse (13) umlaufende Faserschlinge (16) angeordnet sind.

6. Feder (1, 23) mit wenigstens einem druckspannungsbelastbaren Druckkörper (37) geringer Dehnbarkeit, und mit einer auf die geringe Dehnbarkeit des Druckkörpers (37) abgestimmte Kraft-Weg-Übersetzungseinheit (24) zur Kraft-Weg-Übersetzung einer Federkraft F, wobei die Kraft-Weg-Übersetzungseinheit (24) die an einem beweglich ausgebildeten Eingangsstellglied (29) über eine Wegstrecke beaufschlagte Federkraft F in einem bestimmten Kraft-Weg-Übersetzungsverhältnis in eine hohe Kraft an einem beweglich ausgebildeten Ausgangsstellglied (30) umwandelt, die von dem Druckkörper (37) aufgenommen wird, wobei das Ausgangsstellglied (30) derart mit dem Druckkörper (37) in Wirkverbindung steht, dass der Druckkörper (37) im Wesentlichen nur eine Druckspannung im Druckkörper (37) erfährt.

7. Feder nach einem der Ansprüche 1 bis 6, **dadurch gekennzeichnet, dass** das Kraft-Weg-Übersetzungsverhältnis der Kraft-Weg-Übersetzungseinheit (3, 18, 24) mindestens 1:3, vorzugsweise 1:10 beträgt.

8. Feder nach einem der Ansprüche 1 bis 7, **dadurch gekennzeichnet, dass** ein oder mehrere Zugkörper (2, 17, 71, 76) bzw. ein oder mehrere Druckkörper (37) zentrisch oder koaxial oder achsensymmetrisch zur Symmetrieachse (21, 33, 58, 64, 70) des Ausgangsstellglieds (20, 30, 54, 60, 68, 72) angeordnet sind.

9. Feder nach einem der Ansprüche 1 bis 8, **dadurch gekennzeichnet, dass** eine hydraulische Kraft-Weg-Übersetzungseinheit (24) mit einer hydraulischen Antriebsstufe und einer hydraulischen Abtriebsstufe ausgebildet ist, die zwei miteinander verbundene, mit Hydraulikmedium gefüllte Arbeitsräume (26, 28) aufweist und das Eingangsstellglied (29) den antriebsseitigen Arbeitsraum (26) der Antriebsstufe und das Ausgangsstellglied (30, 54, 60, 68, 72) den abtriebsseitigen Arbeitsraum (28) der Abtriebsstufe zumindest teilweise begrenzt.

10. Feder nach Anspruch 9, **dadurch gekennzeichnet, dass** das Eingangsstellglied einen hohlprofilartigen, insbesondere hohlzylindrischen, Antriebskolben aufweist und/oder das Ausgangsstellglied einen hohlprofilartigen, insbesondere hohlzylindrischen, Abtriebskolben (54) aufweist.

11. Feder nach Anspruch 9 oder 10, **dadurch gekennzeichnet, dass** das Ausgangsstellglied einen Abtriebskolben (30) mit einer beweglichen Membran (35) aufweist.

12. Feder nach Anspruch 9 oder 10, **dadurch gekennzeichnet, dass** das Ausgangstellglied einen behälterartigen, unidirektional elastischen, vorzugsweise in seiner Längserstreckung (64) elastischen Abtriebskolben (60) aufweist, der den abtriebsseitigen Arbeitsraum (28) allseitig umschließt.

13. Feder nach Anspruch 12, **dadurch gekennzeichnet, dass** der behälterartige, unidirektional elastische Abtriebskolben (60) aus Faserverbundmaterial besteht, dessen Verstärkungsfasern im Wesentlichen unidirektional und quer zur Elastizitätsrichtung, vorzugsweise quer zur Längserstreckung (64) des Abtriebskolbens (60), erstreckt angeordnet sind.

14. Feder nach einem der Ansprüche 9 bis 13, **dadurch gekennzeichnet, dass** der Zugkörper (2) im abtriebsseitigen Arbeitsraum (28) integriert angeordnet ist.

15. Feder nach Anspruch 9 oder 10, **dadurch gekennzeichnet, dass** das Ausgangstellglied einen behälterartigen, elastischen und zugspannungsbelastbaren Abtriebskolben (68) aufweist, der den abtriebsseitigen Arbeitsraum (28) allseitig umschließt und integrativ einen Hohlprofil-Zugkörper (71) bildet.

16. Feder nach Anspruch 15, **dadurch gekennzeichnet, dass** der behälterartige, elastische und zugspannungsbelastbare Abtriebskolben (68) aus Faserverbundmaterial besteht, dessen Verstärkungsfasern in Umfangrichtung eine Faserorientierung mit einem Winkel von ca. 90° zur Längsachse (70) des Abtriebskolbens (68) aufweisen und die längsgerichteten Verstärkungsfasern eine Faserorientierung mit einem Winkel von ca. 0° bis ca. ± 60° zur Längsachse (70) aufweisen.

17. Feder nach Anspruch 9, **dadurch gekennzeichnet, dass** das Ausgangstellglied einen ringförmigen Abtriebskolben (72) aufweist, der integrativ einen als Kolbenzugring (76) gestalteten Zugkörper (76) bildet.

18. Feder nach einem der Ansprüche 9 bis 17, **dadurch gekennzeichnet, dass** der antriebsseitige und der abtriebsseitige Arbeitsraum (26, 28) über eine, vorzugsweise flexible, Verbindungsleitung (43) miteinander verbunden sind.

19. Feder nach einem der Ansprüche 9 bis 18, **dadurch gekennzeichnet, dass** die hydraulische Kraft-Weg-Übersetzungseinheit (24) ein Dämpfungsglied (40, 45) aufweist.

20. Feder nach Anspruch 19, **dadurch gekennzeichnet, dass** das Dämpfungsglied als ein Ventilblock (40, 45) ausgebildet ist, der mit dem antriebsseitigen und abtriebsseitigen Arbeitsraum (26, 28) in Strömungsverbindung steht.

21. Feder nach einem der Ansprüche 9 bis 20, **dadurch gekennzeichnet, dass** eine externe Hydraulikeinheit (44) mit einem Ausgleichsarbeitsraum (48) vorgesehen ist, der mit dem antriebsseitigen und abtriebsseitigen Arbeitsraum (26, 28) in Strömungsverbindung steht, wobei das Volumen des Ausgleichsarbeitsraumes (48) mittels eines Stellkolbens (47) veränderbar ist.

## Claims

1. Spring (1, 23) with at least one tensile member, capable of withstanding tensile stress (2, 17, 71, 76), of low elasticity, and with a force-displacement conversion unit (3, 18, 24) tailored to the low elasticity of the tensile member (2, 17, 71, 76) for the force-displacement conversion of a spring force F, wherein the force-displacement conversion unit (3, 18, 24) converts the spring force F being applied over a distance to an input control element designed so as to be flexible (6, 19, 29), in a certain force-displacement conversion ratio, into a high force on an output control element designed so as to be flexible (7, 20, 30, 54, 60, 68, 72), which is absorbed by the tensile member capable of withstanding tensile stress (2, 17, 71, 76), wherein the output control element (7, 20, 30, 54, 60, 68, 72) has an operative connection with the tensile member (2, 17, 71, 76) in such a way that the tensile member (2, 17, 71, 76) essentially only experiences tensile stress in the tensile member.

2. Spring in accordance with Claim 1, **characterised in that** the tensile member is designed as a tensile rod (2) or as a tension ring (17).

3. Spring in accordance with Claim 1 or 2, **characterised in that** the tensile member (2, 17, 71, 76) consists of fibre composite material, preferably of carbon fibre-reinforced or glass fibre-reinforced plastic.

4. Spring in accordance with Claim 3, **characterised in that** the reinforcing fibres of the fibre composite material are arranged along a longitudinal axis (14) of the tensile rod (2, 71) or along a circumferential direction of the tension ring (17, 71, 76), preferably extended in an uninterrupted manner.

5. Spring in accordance with Claim 3 or 4, **characterised in that** a bearing eye (13) is constructed on the tensile member (2) and the reinforcing fibres are arranged as a loop of fibres (16) that goes at least part of the way around the bearing eye (13).

6. Spring (1, 23) with at least one compression element(37), capable of withstanding compressive stress, of low elasticity, and with a force-displacement conversion unit (24) tailored to the low elasticity of the compression element (37) for the force-displacement conversion of a spring force F, wherein the force-displacement conversion unit (24)converts the spring force F being applied over a distance to an input control element (29) designed so as to be flexible, in a certain force-displacement conversion ratio, into a high force on an output control element designed so as to be flexible (30), which is absorbed by the compression element (37), wherein the output control element (30) has an operative connection with the compression element (37) in such a way that the compression element (37) essentially only experiences a compressive stress in the compression element (37).

7. Spring in accordance with one of Claims 1 to 6, **characterised in that** the force-displacement conversion ratio of the force-displacement conversion unit (3, 18, 24) is at least 1:3, preferably 1:10.

8. Spring in accordance with one of Claims 1 to 7, **characterised in that** one or more tensile members (2, 17, 71, 76) or one or more compression elements (37) are arranged centrically or coaxially or axisymmetrically in relation to the axis of symmetry (21, 33, 58, 64, 70) of the output control element (20, 30, 54, 60, 68, 72).

9. Spring in accordance with one of Claims 1 to 8, **characterised in that** a hydraulic force-displacement conversion unit (24) is designed with a hydraulic drive stage and a hydraulic output stage which has two working chambers (26, 28) connected to each other and filled with hydraulic medium and the input control element (29) at least partially delimitates the working chamber on the drive side (26) of the drive stage and the output control element (30, 54, 60, 68, 72) at least partially delimitates the working chamber on the output side (28) of the output stage.

10. Spring in accordance with Claim 9, **characterised in that** the input control element has a driving piston in the manner of a hollow profile, in particular a hollow cylindrical profile, and/or the output control element has a output piston (54) in the manner of a hollow profile, in particular a hollow cylindrical profile.

11. Spring in accordance with Claim 9 or 10, **characterised in that** the output control element has an output piston (30) with a flexible membrane (35).

12. Spring in accordance with Claim 9 or 10, **characterised in that** the output control member has a container-like, unidirectionally elastic, preferably elastic in its longitudinal extension, (64) output piston (60), which encloses the working chamber on the output side (28) on all sides.

13. Spring in accordance with Claim 12, **characterised in that** the container-like, unidirectionally elastic output piston (60) consists of fibre composite material whose reinforcing fibres are essentially arranged extending unidirectionally and at right angles to the direction of elasticity, preferably at right angles to the longitudinal extension (64) of the output piston (60).

14. Spring in accordance with one of Claims 9 to 13, **characterised in that** the tensile member (2) is arranged integrated in the working chamber (28) on the output side.

15. Spring in accordance with Claim 9 or 10, **characterised in that** the output control element has a container-like, elastic output piston (68) capable of withstanding tensile stress which encloses the working chamber on the output side (28) on all sides and forms a hollow-profiled tensile member (71) in an integrated manner.

16. Spring in accordance with Claim 15, **characterised in that** the container-like, elastic output piston (68) capable of withstanding tensile stress consists of fibre composite material whose reinforcing fibres - in the circumferential direction - have a fibre orientation with an angle of approx. 90° relative to the longitudinal axis (70) of the output piston (68) and the longitudinally orientated reinforcing fibres have a fibre orientation with an angle of approx. 0° to approx. ± 60° relative to the longitudinal axis (70).

17. Spring in accordance with Claim 9, **characterised in that** the output control element has a ring-shaped output piston (72) which forms, in an integrated manner, a tensile member (76) designed as a piston tension ring (76).

18. Spring in accordance with one of Claims 9 to 17, **characterised in that** the working chambers (26, 28) on the drive side and the output side are connected to each other via a connection line (43) that is preferably flexible.

19. Spring in accordance with one of Claims 9 to 18, **characterised in that** the hydraulic force-displacement conversion unit (24) has an attenuator (40, 45).

20. Spring in accordance with Claim 19, **characterised in that** the attenuator is designed as a valve block (40, 45) which is in flow communication with the working chambers on the drive side and on the output side (26, 28).

21. Spring in accordance with one of Claims 9 to 20, **characterised in that** an external hydraulic unit (44) is equipped with a balancing working chamber (48) which is in flow communication with the working chambers on the drive side and on the output side (26, 28), wherein the volume of the balancing working chamber (48) is capable of being changed by means of a control piston (47).

## Revendications

1. Ressort (1, 23) comprenant au moins un corps de traction (2, 17, 71, 76) doté d'une faible élasticité, pouvant être sollicité en traction, et comprenant une unité de conversion force-déplacement (3, 18, 24) adaptée à la faible élasticité du corps de traction (2, 17, 71, 76) pour la conversion force-déplacement d'une force de ressort F, l'unité de conversion force-déplacement (3, 18, 24) transformant la force de ressort F appliquée à l'actionneur d'entrée (6, 19, 29) mobile le long d'un déplacement, selon un rapport de conversion force-déplacement déterminé, en une force élevée appliquée à un actionneur de sortie (7, 20, 30, 54, 60, 68, 72) mobile et absorbée par le corps de traction (2, 17, 71, 76) pouvant être sollicité en traction, l'actionneur de sortie (7, 20, 30, 54, 60, 68, 72) se trouvant en liaison active avec le corps de traction (2, 17, 71, 76), de telle manière que le corps de traction (2, 17, 71, 76) ne subit, en substance, qu'une contrainte de traction dans le corps de traction.

2. Ressort selon la revendication 1, **caractérisé en ce que** le corps de traction prend la forme d'une tige de traction (2) ou d'un anneau de traction (17).

3. Ressort selon l'une quelconque des revendications 1 ou 2, **caractérisé en ce que** le corps de traction (2, 17, 71, 76) se compose d'un matériau composite fibreux, de préférence un plastique renforcé de fibres de carbone ou de fibres de verre.

4. Ressort selon la revendication 3, **caractérisé en ce que** les fibres de renforcement du matériau composite fibreux suivent le sens longitudinal (14) de la tige de traction (2, 71) ou la périphérie de l'anneau de traction (17, 71, 76), dans l'idéal sans interruption.

5. Ressort selon l'une quelconque des revendications 3 ou 4, **caractérisé en ce qu'**un oeillet (13) est agencé dans le corps de traction (2) et **en ce que** les fibres de renforcement forment, au moins partiellement, une boucle de fibres (16) autour de l'oeillet (13).

6. Ressort (1, 23) comprenant au moins un corps de compression (37) résistant à la compression, doté d'une faible élasticité, et comprenant une unité de conversion force-déplacement adaptée à la faible élasticité du corps de compression (37) pour la conversion force-déplacement (24) d'une force de ressort F, l'unité de conversion force-déplacement (24) transformant la force de ressort F appliquée à un actionneur d'entrée (29) mobile sur un déplacement, suivant un rapport de conversion force-déplacement déterminé, en une force élevée sur un actionneur de sortie mobile (30), cette force étant absorbée par le corps de compression (37), l'actionneur de sortie (30) se trouvant en liaison active avec le corps de compression (37), de telle manière que le corps de compression (37) ne subit, en substance, qu'une contrainte de compression dans le corps de de compression (37).

7. Ressort selon l'une quelconque des revendications 1 à 6, **caractérisé en ce que** le rapport de conversion force-déplacement de l'unité de conversion force-déplacement (3, 18, 24) est d'au moins 1 pour 3, idéalement d'1 pour 10.

8. Ressort selon l'une quelconque des revendications 1 à 7, **caractérisé en ce qu'**un ou plusieurs corps de traction (2, 17, 71, 76) ou bien un ou plusieurs corps de compression (37) sont agencés de façon centrale ou coaxiale ou symétrique à l'axe de symétrie (21, 33, 58, 64, 70) de l'actionneur de sortie (20, 30, 54, 60, 68, 72).

9. Ressort selon l'une quelconque des revendications 1 à 8, **caractérisé en ce qu'**une unité de conversion force-déplacement (24) hydraulique est formée d'un étage moteur hydraulique et d'un étage mené hydraulique, comprenant deux espaces de travail (26, 28) reliés entre eux et remplis de fluide hydraulique, et **en ce que** l'actionneur d'entrée (29) délimite, au moins partiellement, l'espace de travail (26) côté moteur de l'étage moteur et l'actionneur de sortie (30, 54, 60, 68, 72) délimite, au moins partiellement, l'espace de travail (28) côté mené de l'étage mené.

10. Ressort selon la revendication 9, **caractérisé en ce que** l'actionneur d'entrée comprend un piston moteur prenant la forme d'un profilé creux, notamment cylindrique et/ou l'actionneur de sortie comprend un piston mené prenant la forme d'un profilé creux, notamment cylindrique (54).

11. Ressort selon l'une quelconque des revendications 9 ou 10, **caractérisé en ce que** l'actionneur de sortie présente un piston mené (30) avec une membrane mobile (35).

12. Ressort selon l'une quelconque des revendications 9 ou 10, **caractérisé en ce que** l'actionneur de sortie présente un piston mené (60) en forme de contenant, à élasticité unidirectionnelle, idéalement dans sa ligne longitudinale (64), qui ferme l'espace de travail (28) côté mené sur toutes ses faces.

13. Ressort selon la revendication 12, **caractérisé en ce que** le piston mené (60) en forme de contenant et à élasticité unidirectionnelle se compose d'un matériau composite fibreux, dont les fibres de renforcement sont disposées pour l'essentiel de façon unidirectionnelle et transversale par rapport à la ligne longitudinale (64) du piston mené (60) .

14. Ressort selon l'une quelconque des revendications 9 à 13, **caractérisé en ce que** le corps de traction (2) est intégré dans l'espace de travail (28) côté mené.

15. Ressort selon l'une quelconque des revendications 9 ou 10, **caractérisé en ce que** l'actionneur de sortie présente un piston mené (68) en forme de contenant, élastique et résistant à la tension, qui ferme l'espace de travail (28) côté mené sur toutes ses faces et forme, de façon inclusive, un corps de traction (71) en forme de profilé creux.

16. Ressort selon la revendication 15, **caractérisé en ce que** le piston mené (68) en forme de contenant, élastique et résistant à la tension est constitué d'un matériau composite fibreux, dont les fibres de renforcement suivent une ligne circonférentielle, avec une orientation observant un angle d'environ 90° par rapport à l'axe longitudinal (70) du piston mené (68) et les fibres de renforcement longitudinales suivent une orientation observant un angle d'environ 0° à ± 60° par rapport à l'axe longitudinal (70).

17. Ressort selon la revendication 9, **caractérisé en ce que** l'actionneur de sortie présente un piston mené (72) en forme d'anneau qui s'intègre à un corps de traction (76) conçu comme un anneau de traction de piston (76).

18. Ressort selon l'une quelconque des revendications 9 à 17, **caractérisé en ce que** les espaces de travail (26, 28) côté moteur et mené sont reliés entre eux par une barre de jonction (43), idéalement flexible.

19. Ressort selon l'une quelconque des revendications 9 à 18, **caractérisé en ce que** l'unité de conversion force-déplacement (24) hydraulique comprend un dispositif d'atténuation (40, 45).

20. Ressort selon la revendication 19, **caractérisé en ce que** le dispositif d'atténuation prend la forme d'un bloc de vannes (40, 45), qui est relié à l'écoulement des espaces de travail (26, 28) moteur et mené.

21. Ressort selon l'une quelconque des revendications 9 à 20, **caractérisé en ce qu'**une unité hydraulique (44) externe est équipée d'un espace de travail d'équilibrage (48) relié à l'écoulement des espaces de travail (26, 28) moteur et mené, le volume de l'espace de travail d'équilibrage (48) étant modifiable à l'aide d'un piston de réglage (47).
